# EUROPÄISCHE PATENTSCHRIFT

(11) **EP 4 568 824 B1**
(45) Veröffentlichungstag und Bekanntmachung des Hinweises auf die Patenterteilung: **01.07.2026**
(21) Anmeldenummer: 23750619.1
(22) Anmeldetag: 31.07.2023
(51) Int. Cl.: B29C 49/46, B29C 49/42, B29C 49/12, B29C 49/58, B29L 31/00

(54) **VORRICHTUNG UND VERFAHREN ZUM HERSTELLEN EINES MIT FLÜSSIGEM FÜLLGUT BEFÜLLTEN BEHÄLTERS AUS EINEM THERMISCH KONDITIONIERTEN VORFORMLING**
DEVICE AND METHOD FOR PRODUCING A CONTAINER, FILLED WITH LIQUID FILLING MATERIAL, FROM A THERMALLY CONDITIONED PREFORM
DISPOSITIF ET PROCÉDÉ DE FABRICATION D'UN RÉCIPIENT, REMPLI D'UN MATÉRIAU DE REMPLISSAGE LIQUIDE, À PARTIR D'UNE PRÉFORME THERMIQUEMENT CONDITIONNÉE

(30) Priorität: 08.08.2022 DE 102022119880
(43) Veröffentlichungstag der Anmeldung: 18.06.2025
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); LITZENBERG, Michael, 21039 Börnsen (DE); JAISER, Benjamin, 20144 Hamburg (DE); STRASSE, Michael, 22305 Hamburg (DE)
(74) Vertreter: Eisenführ Speiser
(86) Internationale Anmeldenummer: PCT/EP2023/071149
(87) Internationale Veröffentlichungsnummer: WO 2024/033129

(56) Entgegenhaltungen:
- EP-A1- 3 647 017
- DE-A1- 102020 127 290
- US-A1- 2015 328 824
- US-A1- 2018 236 706
- US-A1- 2022 203 596

## Beschreibung

Die Erfindung betrifft eine Vorrichtung zum Herstellen eines mit flüssigem Füllgut befüllten Behälters aus einem thermisch konditionierten Vorformling mittels Einleiten eines Füllguts unter Druck in den Vorformling nach dem Oberbegriff von Anspruch 1. Ferner betrifft die Erfindung ein Verfahren zum Herstellen eines mit flüssigem Füllgut befüllten Behälters nach dem Oberbegriff von Anspruch 15. Des Weiteren betrifft die Erfindung eine Anlage zum Herstellen von mit flüssigem Füllgut befüllten Behältern sowie eine Verwendung einer Vorrichtung und/oder einer Anlage zum Herstellen von mit flüssigem Füllgut befüllten Behältern.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden. Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind beispielsweise in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil in Längsrichtung und/oder in Umfangsrichtung aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen. Auch hier wird der Vorformling vor dem Form- und Füllvorgang zunächst temperaturkonditioniert, das heißt auf eine für die hydraulische Umformung geeignete Temperatur erwärmt und ggf. ein Temperaturprofil aufgeprägt.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1. Die vorliegende Erfindung betrifft das Formen der Behälter aus den Vorformlingen durch das Füllgut selbst und Maschinen, wie in den Beispielen offenbart, auf die daher explizit Bezug genommen wird,

Aus US 2018/0236706 A1 ist ein hydraulisches Blasformsystem zum Formen eines Behälters aus einem Vorformling durch Einspritzen eines flüssigen Produkts in den Vorformling bekannt. Das System umfasst einen Dichtungsstift, der sich innerhalb des Formkopfes befindet und zwischen einer geschlossenen und einer geöffneten Position bewegt werden kann.

Aus US 2015/0328824 A1 ist eine Blasformvorrichtung bekannt, umfassend: eine Form; eine Blasdüse, die dicht mit einem rohrförmigen Mündungsteil eines Vorformlings in Verbindung steht, wenn der Vorformling in die Form eingesetzt ist; und eine Reckstange. Die Blasformvorrichtung verleiht einem Behälter eine Form, indem der Vorformling mittels der Reckstange in Längsrichtung gestreckt wird und indem der Vorformling mittels einer unter Druck stehenden Flüssigkeit, die über die Blasdüse von einem separat vorgesehenen Zufuhrteil für unter Druck stehende Flüssigkeit zugeführt wird, in eine ausgedehnte Form gestreckt wird.

Aus US 2022/0203596 A1 ist eine Vorrichtung zum Blasformen von Flüssigkeiten bekannt, die umfasst: eine Düse, die ausgebildet ist, um einen Fließweg für eine Flüssigkeit zu definieren, der eine Öffnungs- und Schließöffnung sowie eine Auslassöffnung umfasst; einen Dichtungskörper, der ausgebildet ist, um die Öffnungs- und Schließöffnung zu öffnen und zu schließen. Der Dichtungskörper umfasst einen röhrenförmigen Verlängerungsabschnitt, der ausgebildet ist, um sich in die Auslassöffnung zu erstrecken, wenn der Dichtungskörper die Öffnungs- und Schließöffnung schließt.

Aus EP 3647017 A1 ist ein Verfahren zur Herstellung eines Behälters bekannt, umfassend: einen Luftablassschritt zum Ablassen von Luft innerhalb eines Vorformlings durch Öffnen eines vorläufigen Zufuhrpfades durch einen Öffnungs-/Schließkörper in einem Zustand, in dem sich ein Dichtungskörper in einer geschlossenen Position befindet, um eine Flüssigkeit in den Vorformling zuzuführen; und einen Flüssigkeitsblasformschritt des Formens des Vorformlings zu einem flüssigkeitsenthaltenden Behälter durch Bewegen des Dichtungskörpers von der geschlossenen Position zu einer offenen Position, um die Flüssigkeit unter Druck in den Vorformling durch ein Sitzteil zuzuführen.

Beim Formen und Füllen der Behälter wird der betreffende Vorformling typischerweise durch eine in eine Öffnung eingeführte Reckstange gereckt. Die Öffnung des Vorformlings ist zugleich die Öffnung des ausgeformten und befüllten Behälters. Während oder nach dem Befüllen wird die Reckstange aus dem Behälter zurückgezogen. Dadurch wird dem Behälter ein Volumen - das Volumen der im Füllgut eingetauchten Reckstange - entnommen bzw. nicht länger Füllgut von der Reckstange verdrängt. Im Bereich der Öffnung kann somit ein Unterdruck entstehen, durch den unbeabsichtigt zusätzliche Flüssigkeit angesaugt werden kann und/oder der Behälter verformt werden kann. Es kann auch vorkommen, dass beim Formen und Füllen im Bereich der Öffnung ein Überdruck verbleibt, der ebenfalls unerwünschte Effekte bewirken kann. Vor dem Zurückziehen der Reckstange besteht oberhalb des Füllgutspiegels ein Überdruck, denn das Füllgut wird mit einem Fülldruck in den Vorformling eingeführt. Es ist möglich, dass auch nach dem Zurückziehen der Reckstange ein Überdruck verbleibt. Ob sich ein Überdruck, ein Unterdruck oder der Umgebungsdruck einstellt, hängt vom Volumen ab, das von der Reckstange verdrängt und nach dem zurückziehen wieder freigegeben wird, dem Volumen oberhalb des Füllgutspiegels und dem Druck in diesem Volumen nach Abschluss des Füllgutzustroms und vor Zurückziehen der Reckstange. Unabhängig davon, ob ein Überdruck oder ein Unterdruck bestehen bleibt, erfolgt in aller Regel ein Druckausgleich, bevor der fertige Behälter aus der Umform- und Füllstation entnommen wird.

Ein Unterdruck oder Überdruck im Bereich der Öffnung des Behälters kann insbesondere deshalb ein Problem darstellen, weil hierdurch Füllgut aus dem Behälter austreten kann. Dies kann zu einem unerwünschten Verlust von Füllgut führen. Außerdem können Teile der Vorrichtung beim Austritt von Füllgut aus dem Behälter mit Füllgut verunreinigt werden, was in der Regel ebenfalls unerwünscht ist, insbesondere mit Blick auf eine möglichst keimfreie Befüllung der Behälter.

Eine Vorrichtung mit der ein Unterdruck im Bereich der Öffnung ausgleichbar ist, ist bekannt aus DE 10 2020 127 290 A1. Demnach ist es bekannt, Belüftungszugänge im Bereich der Austrittsöffnung der Füllventile vorzusehen. Die Belüftungszugänge können beispielsweise als Bohrungen mit einem darin angeordneten Ventil, beispielsweise in Form eines Rückschlagventils, ausgeführt sein. Durch ein Belüften des Bereichs der Öffnung des Behälters kann somit ein Druckausgleich in diesem Bereich bewirkt werden. Ein Nachteil einer solchen Vorrichtung besteht allerdings darin, dass ausreichend Platz für die Belüftungszugänge vorgesehen werden muss und die Herstellung dieser Belüftungszugänge aufwendig sein kann. Außerdem ist gegebenenfalls eine Steuerung eines Ventils oder mehrerer Ventile notwendig.

Der Erfindung liegt daher die Aufgabe zugrunde eine verbesserte Lösung bereitzustellen, die wenigstens eines der genannten Probleme adressiert. Insbesondere ist es Aufgabe der Erfindung, eine Lösung bereitzustellen, die es ermöglicht, nach dem Füllen und Formen des Behälters innerhalb kurzer Zeit und auf zuverlässige Weise einen Druckausgleich im Bereich der Öffnung des Behälters herzustellen.

Gemäß einem ersten Aspekt wird diese Aufgabe gelöst durch eine Vorrichtung mit den Merkmalen des Anspruchs 1. Vorgesehen ist eine Vorrichtung zum Herstellen eines mit flüssigem Füllgut befüllten Behälters aus einem thermisch konditionierten Vorformling mittels Einleiten eines Füllguts unter Druck in den Vorformling, umfassend ein Füllventil für das Einleiten des Füllgutes unter Druck in den Vorformling, das entlang einer Längsachse zwischen einer Füllstellung, in der das Füllventil mit seinem Auslass dichtend an einem Vorformling anliegt, und einer Neutralstellung, in der das Füllventil beabstandet zu einem Vorformling steht, beweglich ist, einen entlang der Längsachse und innerhalb des Füllventils axial bewegbaren Ventilkörper, der ein Zustromlumen des Füllventils beherrscht und relativ zu dem Füllventil aus einer Dichtstellung, also die Verbindung zwischen dem Zustromlumen und dem Vorformling verschließenden Stellung, in eine Freigabestellung bringbar ist, in der eine Fluidverbindung zwischen dem Zustromlumen und dem Vorformling besteht, eine sich innerhalb des Ventilkörpers entlang der Längsachse erstreckende Reckstange, die entlang der Längsachse relativ zum Ventilkörper axial bewegbar ist zum Recken des Vorformlings, mit einer auslassseitigen Reckstangenspitze, und eine Reckstangendichtung, die zwischen dem Ventilkörper und der Reckstange angeordnet ist und die einen auslassseitigen Raum von einem auslassabgewandten Raum trennt.

Erfindungsgemäß ist vorgesehen, dass die Reckstange während der Positionierung des Füllventils in der Füllstellung und des Ventilkörpers in der Dichtstellung in eine die Dichtwirkung der Reckstangendichtung aufhebende und die Trennung der beiden Räume aufhebende Position beweglich ist. Erfindungsgemäß erfolgt also der Druckausgleich durch eine gezielte Bewegung der Reckstange aus einer dichten Position in eine die Dichtwirkung aufhebende Position. Diese gezielte Bewegung erfolgt in aller Regel zu einem Zeitpunkt, zu dem der Füll- und Umformvorgang abgeschlossen ist, das Füllventil aber noch dichtend auf der Behältermündung aufliegt und somit im Mündungsbereich des Behälters noch ein gegenüber der Umgebung abgeschlossenes Volumen vorliegt.

Eine solche Vorrichtung ist vorzugsweise ausgebildet, um einen mit flüssigem Füllgut befüllten Behälter aus einem thermisch konditionierten Vorformling mittels Einleiten eines Füllguts unter Druck in den Vorformling herzustellen. Das Füllventil ist von der Füllstellung in die Neutralstellung bewegbar. In der Füllstellung liegt der Auslass des Füllventils dichtend an dem Vorformling an. In der Neutralstellung liegt der Auslass des Füllventils nicht dichtend an dem Vorformling an, sondern ist beabstandet zum Vorformling angeordnet. Der Ventilkörper ist von der Dichtstellung in die Freigabestellung bewegbar. In der Dichtstellung ist die Verbindung zwischen dem Zustromlumen innerhalb des Füllventils und dem Vorformling verschlossen. In der Freigabestellung ist die Verbindung zwischen dem Zustromlumen und dem Vorformling offen, sodass eine Fluidverbindung zwischen dem Zustromlumen und dem Vorformling besteht. In der Freigabestellung kann das Füllgut über das Zustromlumen in den Vorformling geführt werden. Unter einem Zustromlumen ist dabei das Lumen im Sinne eines freien Leitungsquerschnitts gemeint, in dem das Füllgut innerhalb des Füllventils zum Vorformling bzw. zum Behälter geführt wird. Insbesondere ist darunter ein Hohlraum zu verstehen, wobei durch eine Bewegung des Ventilkörpers entlang der Längsachse das Füllventil geöffnet und geschlossen werden kann und so eine Fluidverbindung zwischen diesem Hohlraum und dem Vorformling hergestellt werden kann.

Die Reckstange ist axialbeweglich innerhalb des umgebenden Füllventils angeordnet. Für die Abdichtung der beweglichen Reckstange gegenüber dem umgebenden Füllventil ist eine die Reckstange umgebende Reckstangendichtung vorgesehen.

Die Reckstange erstreckt sich entlang der Längsachse. Die Reckstange kann einen runden Querschnitt aufweisen und rotationssymmetrisch um die Längsachse ausgebildet sein. Die Reckstange erstreckt sich bevorzugt innerhalb des Ventilkörpers. Die Reckstange kann vorzugsweise relativ zum Ventilkörper entlang der Längsachse bewegt werden und insbesondere in Richtung des Vorformlings bewegt werden, um den Vorformling zu recken. Die Reckstangenspitze ist insbesondere als Endbereich der Reckstange zu verstehen, der in den Vorformling eingefahren wird. Die Begriffe Reckstangenspitze und auslassseitige Reckstangenspitze werden hier synonym verwendet.

Die Reckstangendichtung erstreckt sich vorzugsweise entlang der Längsachse von dem auslassseitigen Raum zu dem auslassabgewandten Raum. Die Reckstangendichtung ist vorzugsweise rotationssymmetrisch um die Längsachse ausgebildet. Vorzugsweise weist die Reckstangendichtung eine mittig angeordnete Ausnehmung entlang der Längsachse zur Aufnahme der Reckstange auf. Der auslassabgewandte Raum ist vorzugsweise zwischen dem Ventilkörper und der Reckstange auf der auslassabgewandten Seite der Reckstangendichtung angeordnet. Der auslassseitige Raum ist vorzugsweise in dem Bereich des Auslasses des Füllventils angeordnet.

Die Reckstange ist in die die Dichtwirkung der Reckstangendichtung aufhebende Position bewegbar. In dieser Position ist die Trennung zwischen dem auslassabgewandten Raum und dem auslassseitigen Raum aufgehoben. Die Reckstange kann insbesondere dann in diese Position bewegt werden, wenn das Füllventil in der Füllstellung angeordnet ist und der Ventilkörper in der Dichtstellung angeordnet ist. Wird die Reckstange in diese die Dichtwirkung aufhebende Position bewegt, so kann dadurch, dass die Dichtwirkung der Reckstangendichtung aufgehoben wird, eine Gasverbindung zwischen dem auslassseitigen Raum und dem auslassabgewandten Raum bereitgestellt werden, über die ein Druckausgleich zwischen dem auslassseitigen Raum und dem auslassabgewandten Raum erfolgen kann. Der Druckausgleich wird also durch die Positionierung der Reckstange gesteuert.

Ein erster Vorteil einer solchen Vorrichtung besteht darin, dass mittels Bewegung der Reckstange in die die Dichtwirkung der Reckstangendichtung aufhebende Position auf besonders vorteilhafte Weise ein Druckausgleich im Auslassbereich ermöglicht wird, ohne dass für den Druckausgleich zusätzliche Belüftungszugänge oder dergleichen notwendig sind.

Ein weiterer Vorteil einer solchen Vorrichtung besteht darin, dass hiermit auf zuverlässige Weise und innerhalb relativ kurzer Zeit ein Druckausgleich hergestellt werden kann.

Ein weiterer Vorteil einer solchen Vorrichtung besteht darin, dass ein Austritt des Füllguts aufgrund des Druckausgleichs vermieden werden kann. Außerdem bleibt die Vorrichtung insbesondere im Auslassbereich verunreinigungsfrei, da das Füllgut nicht druckbedingt aus dem Behälter herausspritzt.

Ein weiterer Vorteil einer solchen Vorrichtung besteht darin, dass ausgehend von bestehenden Vorrichtungen nur geringe konstruktive Anpassungen notwendig sind, damit die Reckstange in einer Position die Dichtwirkung der Reckstangendichtung aufheben kann, wodurch ein Druckausgleich im Auslassbereich ermöglicht wird. Somit können auch bestehende Vorrichtungen so angepasst und/oder verwendet werden, dass ein Druckausgleich über die Positionierung der Reckstange möglich ist.

Vorteilhafte Ausführungsformen und Konkretisierungen dieser allgemeinen erfindungsgemäßen technischen Lehre sind in den Unteransprüchen angegeben oder ergeben sich aus der Figurenbeschreibung.

Grundsätzlich wäre denkbar, dass die Reckstangenichtung an der Reckstange angeordnet und zusammen mit der Reckstange axialbeweglich angeordnet ist. Gemäß einer besonders bevorzugten Ausführungsform ist aber die Reckstange, insbesondere axial entlang der Längsachse, relativ zur Reckstangendichtung bewegbar. Die Reckstangendichtung ist vorzugsweise als Gleitdichtung ausgebildet, sodass die Reckstange sich entlang der Längsachse bewegen kann, ohne die Reckstangendichtung mitzubewegen. Die Reckstangendichtung ist vorzugsweise eine dynamische Dichtung, die ausgebildet ist, um eine axiale Bewegung der Reckstange entlang der Längsachse zu erlauben und dabei den auslassabgewandten Raum und den auslassseitigen Raum voneinander abzudichten.

Es ist besonders bevorzugt, dass die Reckstangendichtung an dem Ventilkörper angeordnet ist und mit dem Ventilkörper, vorzugsweise kraft- und/oder formschlüssig, verbunden ist. Vorzugsweise ist an dem Ventilkörper eine Dichtungsausnehmung vorgesehen, in der die Reckstangendichtung einsetzbar ist, sodass die Reckstangendichtung hierüber formschlüssig mit dem Ventilkörper verbunden ist. Eine solche Dichtungsausnehmung kann beispielsweise einen oder mehrere Absätze umfassen und/oder nutförmig entlang des Innenumfangs des Ventilkörpers ausgebildet sein.

Gemäß einer bevorzugten Ausführungsform ist in der die Dichtwirkung der Reckstangendichtung aufhebenden und die Trennung der beiden Räume aufhebenden Position der Reckstange die auslassseitige Reckstangenspitze bezogen auf die Längsachse in Höhe eines an den auslassabgewandten Raum angrenzenden Abschnitts der Reckstangendichtung, insbesondere parallel zu dem den auslassabgewandten Raum angrenzenden Abschnitt der Reckstangendichtung, angeordnet. Die auslassseitige Reckstangenspitze kann sich vorzugsweise mit der Reckstangendichtung entlang eines gemeinsamen Abschnitts der Längsachse erstrecken. Vorzugsweise erstreckt sich die Reckstange jedoch nicht entlang der gesamten Erstreckung der Reckstangendichtung entlang der Längsachse. Die Reckstange wird vorzugsweise mittels eines Entlüftungshubs in diese Position bewegt, wobei die Reckstange nicht nur den üblichen Weg in den Vorformling hinein, dann entlang des Reckweges die Reckung des Vorformlings ausführend und schließlich wieder heraus bewegt wird,, sondern nach dieser Bewegung der Reckstange wird die Reckstange zusätzlich in Richtung des auslassabgewandten Raums in eine Entlüftungshubposition bewegt. Die Reckstange wird dabei weiter als üblich angehoben, wodurch die Dichtwirkung der Reckstangendichtung aufgehoben werden kann. Ein solcher Entlüftungshub wird in zeitlicher Hinsicht vorzugsweise nach Abschluss des Füllens und Formens eines Behälters und vor dem Bewegen des Füllventils von der Füllstellung in die Neutralstellung durchgeführt. So wird ein Druckausgleich im Auslassbereich ermöglicht, während das Füllventil noch mit seinem Auslass dichtend an dem aus dem Vorformling geformten Behälter anliegt. Auf diese Weise kann im Öffnungsbereich des gefüllten und geformten Behälters ein Druck im Bereich des Umgebungsdrucks, insbesondere ein Druck der dem Umgebungsdruck entspricht, erzeugt werden, während das noch dichtend aufliegende Füllventil als Spritzschutz fungiert. Beim anschließenden Bewegen des Füllventils von der Füllstellung in die Neutralstellung kommt es dann nicht zu einem druckdifferenzbedingten Herausspritzen des Füllguts aus dem Behälter.

Gemäß einer weiteren vorteilhaften Ausführungsform ist vorgesehen, dass in der die Dichtwirkung der Reckstangendichtung aufhebenden und die Trennung der beiden Räume aufhebenden Position der Reckstange die auslassseitige Reckstangenspitze bezogen auf die Längsachse beabstandet zu einem an den auslassabgewandten Raum angrenzenden Abschnitt der Reckstangendichtung, insbesondere in dem auslassabgewandten Raum, angeordnet ist. Die Reckstange und/oder die auslassseitige Reckstangenspitze kann gemäß dieser alternativen Ausführungsform vollständig im auslassabgewandten Raum angeordnet sein und sich dann nicht mit der Reckstangendichtung entlang eines gemeinsamen Abschnitts der Längsachse erstrecken, sodass die Reckstangenspitze in Richtung der Längsachse einen Abstand zur Reckstangendichtung aufweist.

Es ist besonders bevorzugt, wenn der auslassabgewandte Raum mit der die Vorrichtung umgebenden Umgebungsluft gastechnisch verbunden und/oder verbindbar ist, zur Belüftung und/oder Entlüftung des auslassabgewandten Raums mittels der Umgebungsluft. Der auslassabgewandte Raum kann beispielsweise mittels einer Entlüftungsbohrung mit der Umgebungsluft verbunden sein, wobei in der Entlüftungsbohrung ein Ventil angeordnet sein kann.

Es ist besonders bevorzugt, dass der auslassabgewandte Raum mit einem Gas, insbesondere in Form von Luft, das in einem begrenzten Raum angeordnet ist, gastechnisch verbunden und/oder verbindbar ist, zur Belüftung und/oder Entlüftung des auslassabgewandten Raums mittels des Gases.

Es ist besonders bevorzugt, dass die Reckstangendichtung an ihrem Innenumfang eine Ausnehmung aufweist, die einen Abschnitt zwischen der Reckstange und der Reckstangendichtung ausbildet, an dem die Reckstange und der Innenumfang der Reckstangendichtung nicht in Kontakt stehen. Wenn die Reckstange in eine Position bewegt wird, in der die Reckstangenspitze im Bereich der Ausnehmung angeordnet ist, so kann die Dichtwirkung der Reckstangendichtung dadurch aufgehoben werden. Eine Gasverbindung zwischen dem auslassabgewandten Raum und dem auslassseitigen Raum kann dabei über die Ausnehmung entlang der Ausnehmung zumindest abschnittsweise parallel zur Reckstange verlaufen. Mit einer solchen Ausnehmung ist es daher möglich, dass die Reckstange, und insbesondere die Reckstangenspitze, nicht vollständig aus der Reckstangendichtung herausbewegt werden muss, um die Dichtwirkung der Reckstangendichtung aufzuheben. Dadurch kann auf besonders vorteilhafte Weise erreicht werden, dass in der die Dichtwirkung aufhebenden Position der Reckstange ein Druckausgleich im Auslassbereich erfolgt und die Reckstange gleichzeitig weiter durch die Reckstangendichtung axial geführt wird.

Weiter ist es bevorzugt, dass die Ausnehmung in jeder Position der Reckstange mit dem auslassabgewandten Raum verbunden ist. Die Ausnehmung ist vorzugsweise nicht mit dem auslassseitigen Raum verbunden, wenn die Reckstange nicht in der die Dichtwirkung aufhebenden Position angeordnet ist.

Weiter ist es bevorzugt, dass die Ausnehmung in der die Dichtwirkung der Reckstangendichtung aufhebenden und die Trennung der beiden Räume aufhebenden Position der Reckstange mit dem auslassseitigen Raum verbunden ist. Eine Verbindung für einen Druckausgleich kann dann von dem auslassabgewandten Raum über die Ausnehmung zum auslassseitigen Raum breitgestellt werden.

Weiter ist es bevorzugt, dass die Ausnehmung in Form einer Nut ausgebildet ist, die parallel zu der Längsachse am Innenumfang der Reckstangendichtung vom auslassabgewandten Raum in Richtung des auslassseitigen Raums verläuft, wobei die Ausnehmung vorzugsweise nicht bis zum auslassseitigen Raum verläuft. Die Nut verläuft vorzugsweise im oberen Bereich der Reckstangendichtung. So ist es möglich, dass über diese Nut eine Gasverbindung zwischen dem auslassabgewandten Raum und dem auslassseitigen Raum hergestellt werden kann, wenn die Reckstange nur abschnittsweise im oberen Bereich der Reckstangendichtung innerhalb der Reckstangendichtung angeordnet ist.

Noch weiter ist es bevorzugt, dass die Reckstangendichtung mehrere, insbesondere drei, Ausnehmungen aufweist, die vorzugsweise äquidistant zueinander und jeweils am Innenumfang der Reckstangendichtung angeordnet sind. Die mehreren Ausnehmungen weisen vorzugsweise die gleiche Form auf. Die mehreren Ausnehmungen verlaufen vorzugsweise parallel zur Längsachse und sind insbesondere gleich lang ausgeführt. Mittels mehrerer Ausnehmungen kann eine symmetrische Luftströmung bei der Herstellung eines Druckausgleichs erreicht werden, sodass durch eine solche Luftströmung wirkende Kräfte in Richtung senkrecht zur Längsachse in Summe gegenseitig ausgeglichen werden können. Auch für die Führung der Reckstange in der Reckstangendichtung kann es vorteilhaft sein, wenn mehrere Ausnehmungen entlang des Innenumfangs der Reckstangendichtung angeordnet sind, da dadurch eine einseitige und/oder unsymmetrische Krafteinwirkung zwischen Reckstange und Reckstangendichtung vermieden werden kann.

Gemäß einer weiteren Ausführungsform ist vorgesehen, dass die Reckstange eine Querschnittsverjüngung aufweist, die ausgebildet ist, um in der die Dichtwirkung der Reckstangendichtung aufhebenden Position eine Verbindung zwischen dem auslassseitigen Raum und dem auslassabgewandten Raum bereitzustellen. Eine solche Querschnittsverjüngung kann zusätzlich oder alternativ zu einer Ausnehmung oder mehreren Ausnehmungen in der Reckstangendichtung vorgesehen werden. Über eine solche Querschnittsverjüngung kann ähnlich wie über eine Ausnehmung in der Reckstangendichtung ein Kanal für einen Luftaustausch zwischen dem auslassabgewandten Raum und dem auslassseitigen Raum bereitgestellt werden. So kann vorzugsweise in der die Dichtwirkung aufhebenden Position der Reckstange eine Gasverbindung zwischen dem auslassabgewandten Raum über die Querschnittsverjüngung und/oder über eine oder mehrere Ausnehmungen in der Reckstangendichtung erzeugt werden.

Vorzugsweise ist die Querschnittsverjüngung im Bereich der auslassseitigen Reckstangenspitze angeordnet, wobei die Querschnittsverjüngung vorzugsweise in Form einer umlaufenden Nut ausgebildet ist. Die Querschnittsverjüngung ist in Richtung der Längsachse vorzugsweise höchstens 10 cm, besonders bevorzugt höchstens 5 cm, insbesondere höchstens 3 cm von der auslassseitigen Reckstangenspitze beabstandet. Die Querschnittsverjüngung kann insbesondere in Form einer Taillierung der Reckstange im Bereich der Reckstangenspitze ausgeführt sein.

Ferner ist bevorzugt, wenn die Reckstange in Richtung der Längsachse zu beiden Seiten der Querschnittsverjüngung den gleichen Querschnitt aufweist, der größer ist als der Querschnitt im Bereich der Querschnittsverjüngung. Im Bereich der Querschnittsverjüngung ist der Querschnitt der Reckstange somit vorzugsweise geringer als der Querschnitt der Reckstange im Übrigen.

Es ist besonders bevorzugt, dass die Reckstange in eine Reckposition bewegbar ist, in der die Reckstangendichtung ausgebildet ist, um eine fluiddichte, insbesondere gasdichte, Abdichtung zwischen den beiden Räumen herzustellen. Die Reckstange kann entlang der Längsachse entlang eines Reckwegs bewegt werden. Unter einem Reckweg ist dabei insbesondere der Weg der Reckstange zu verstehen, auf dem die Reckstange eine Reckkraft und/oder eine führende Kraft auf den Vorformling ausübt. Dies ist gleichsetzbar mit dem Weg der Reckstange, der mit dem Anliegen der Reckstangenspitze an dem Boden des Vorformlings beginnt und mit dem Erreichen einer Endposition endet, wobei in dieser Endposition in der Regel der Boden des vollständig gereckten Vorformlings zwischen Reckstangenspitze und umgebender Form eingeklemmt ist. Der Reckweg beschreibt somit den Weg, den die Reckstange beim Recken und/oder führen des Vorformlings zurücklegt, beginnend mit dem ersten Kontakt zwischen Reckstangenspitze und Vorformling. Vorzugsweise besteht bei einer Bewegung der Reckstange entlang des Reckwegs zu jeder Zeit eine fluiddichte Abdichtung mittels der Reckstangendichtung zwischen dem auslassabgewandten Raum und dem auslassseitigen Raum. Nachdem die Reckstange entlang des Reckweges zum Formen des Behälters in den Vorformling hinein- und wieder herausbewegt und dann ganz aus dem Vorformling herausbewegt wurde, kann anschließend eine Entlüftungshubbewegung ausgeführt werden, indem die Reckstange noch weiter in Richtung des auslassabgewandten Raums bewegt wird, wodurch dann die Dichtwirkung der Reckstangendichtung kurzzeitig aufgehoben werden kann, um einen Druckausgleich im Bereich der Auslassöffnung zu ermöglichen.

Gemäß einer alternativen, als weniger vorteilhaft betrachteten Ausführungsform ist vorgesehen, dass die Reckstangendichtung mit der Reckstange fest verbunden ist, sodass die Reckstangendichtung mittels Bewegung der Reckstange entlang der Längsachse mit der Reckstange entlang der Längsachse mitbewegbar ist. Dabei kann der Ventilkörper an seinem Innenumfang eine Durchmesseraufweitung aufweisen, die ausgebildet ist, um bei Bewegung der Reckstangendichtung entlang der Längsachse in den Bereich der Durchmesseraufweitung die Dichtwirkung der Reckstangendichtung aufzuheben und die Trennung der beiden Räume aufzuheben. Ferner kann der Ventilkörper in Richtung der Längsachse zu beiden Seiten der Durchmesseraufweitung den gleichen Innenumfang aufweisen, der kleiner ist als der Innenumfang im Bereich der Durchmesseraufweitung. Über eine solche Durchmesseraufweitung kann bei dieser Ausführungsform, bei der die Reckstangendichtung mit der Reckstange mitbewegt wird, in einer bestimmten Position und/oder in einem bestimmten Bereich der Reckstangendichtung die Dichtwirkung der Reckstangendichtung aufgehoben werden, indem eine Verbindung zwischen dem auslassabgewandten Raum und dem auslassseitigen Raum über die Durchmesseraufweitung bereitgestellt wird.

Gemäß einem weiteren Aspekt wird die eingangs genannte Aufgabe gelöst durch eine Anlage mit den Merkmalen des Anspruchs 14. Danach ist eine Anlage zum Herstellen von mit flüssigem Füllgut befüllten Behältern aus thermisch konditionierten Vorformlingen mittels Einleiten eines Füllguts unter Druck in die Vorformlinge mit einer wie hier beschriebenen Vorrichtung vorgesehen, vorzugsweise umfassend mehrere Form- und Füllstationen, wobei jede der Form- und Füllstationen eine wie hier beschriebene Vorrichtung aufweist.

Gemäß einem weiteren Aspekt wird die eingangs genannte Aufgabe gelöst durch ein Verfahren mit den Merkmalen des Anspruchs 15. Danach ist ein Verfahren zum Herstellen eines mit flüssigem Füllgut befüllten Behälters aus einem thermisch konditionierten Vorformling vorgesehen, umfassend die Schritte: Bereitstellen einer Vorrichtung zum Herstellen eines mit flüssigem Füllgut befüllten Behälters aus einem thermisch konditionierten Vorformling, insbesondere einer wie hier beschriebenen Vorrichtung, Bewegen eines Füllventils zum Einleiten des Füllgutes in den Vorformling unter Druck entlang einer Längsachse von einer Neutralstellung, in der das Füllventil beabstandet zu einem Vorformling steht, in eine Füllstellung, in der das Füllventil mit seinem Auslass dichtend an einem Vorformling anliegt, Bewegen eines Ventilkörpers, der ein Zustromlumen des Füllventils beherrscht, axial entlang der Längsachse und innerhalb des Füllventils aus einer Freigabestellung, in der eine Fluidverbindung zwischen dem Zustromlumen und dem Vorformling besteht, in eine Dichtstellung, also die Verbindung zwischen dem Zustromlumen und dem Vorformling verschließenden Stellung.

Erfindungsgemäß umfasst das Verfahren den Schritt: Bewegen einer Reckstange, die sich innerhalb des Ventilkörpers entlang der Längsachse erstreckt, bis eine auslassseitige Reckstangenspitze in eine die Dichtwirkung einer Reckstangendichtung, die zwischen dem Ventilkörper und der Reckstange angeordnet ist und die einen auslassseitigen Raum von einem auslassabgewandten Raum trennt, aufhebende und die Trennung der beiden Räume aufhebende Position.

Gemäß einer besonders bevorzugten Ausführungsform umfasst das Verfahren: Ausformen und Füllen des Behälters, wobei das Füllventil in der Füllstellung angeordnet ist und der Ventilkörper in der Freigabestellung angeordnet ist, mittels zumindest zeitweise gleichzeitig ausgeführtem Einleiten eines Fluides durch das Zustromlumen in den Vorformling, und Bewegen der Reckstange entlang der Längsachse entlang eines Reckweges, wodurch der Vorformling entlang der Längsachse gereckt wird.

Es ist besonders bevorzugt, wenn die Reckstange mittels eines Entlüftungshubs in die die Dichtwirkung der Reckstangendichtung aufhebende und die Trennung der beiden Räume aufhebende Position bewegt wird, indem die Reckstange in die auslassabgewandte Richtung bewegt wird, sodass die auslassseitige Reckstangenspitze bezogen auf die Längsachse in Höhe eines an den auslassabgewandten Raum angrenzenden Abschnitts der Reckstangendichtung, insbesondere parallel zu dem an den auslassabgewandten Raum angrenzenden Abschnitt der Reckstangendichtung, bewegt wird.

Gemäß einer weiteren Ausführungsform ist vorgesehen, dass die Reckstange mittels eines Entlüftungshubs in die die Dichtwirkung der Reckstangendichtung aufhebende und die Trennung der beiden Räume aufhebende Position bewegt wird, indem die Reckstange in die auslassabgewandte Richtung bewegt wird, sodass die auslassseitige Reckstangenspitze bezogen auf die Längsachse beabstandet zu einem an den auslassabgewandten Raum angrenzenden Abschnitt der Reckstangendichtung, insbesondere in dem auslassabgewandten Raum, bewegt wird.

Gemäß einem weiteren Aspekt wird die eingangs genannte Aufgabe gelöst durch eine Verwendung einer Vorrichtung und/oder einer Anlage mit den Merkmalen des Anspruchs 18. Danach ist eine Verwendung einer wie hier beschriebenen Vorrichtung und/oder einer wie hier beschriebenen Anlage zum Herstellen von mit flüssigem Füllgut befüllten Behältern aus thermisch konditionierten Vorformlingen mittels Einleiten eines Füllguts unter Druck in die Vorformlinge vorgesehen, insbesondere zum Herstellen von mit flüssigem Füllgut, beispielsweise Trinkwasser, befüllten thermoplastischen Flaschen, insbesondere umfassend oder bestehend aus PET.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden nachfolgend und rein beispielhaft anhand der beiliegenden Figuren erläutert. Es zeigen:
- Fig. 1:: eine schematische teilgeschnittene Ansicht einer Vorrichtung zum Herstellen eines mit flüssigem Füllgut befüllten Behälters,
- Fig. 2:: eine schematische Schnittdarstellung eines Ausschnitts einer Vorrichtung zum Herstellen eines mit flüssigem Füllgut befüllten Behälters mit zugeführtem Vorformling,
- Fig. 3:: eine schematische Schnittdarstellung eines Ausschnitts einer Vorrichtung zum Herstellen eines mit flüssigem Füllgut befüllten Behälters mit abgesenktem Füllventil vor dem Füllen und Formen des Behälters,
- Fig. 4:: eine schematische Schnittdarstellung eines Ausschnitts einer Vorrichtung zum Herstellen eines mit flüssigem Füllgut befüllten Behälters mit geöffnetem Füllventil,
- Fig. 5:: eine schematische Schnittdarstellung eines Ausschnitts einer Vorrichtung zum Herstellen eines mit flüssigem Füllgut befüllten Behälters mit geöffnetem Füllventil und mit in den Vorformling eingefahrener Reckstange,
- Fig. 6:: eine schematische Schnittdarstellung eines Ausschnitts einer Vorrichtung zum Herstellen eines mit flüssigem Füllgut befüllten Behälters mit wieder geschlossenem Füllventil nach dem Füllen und Formen des Behälters,
- Fig. 7:: eine schematische Schnittdarstellung eines Ausschnitts einer Vorrichtung zum Herstellen eines mit flüssigem Füllgut befüllten Behälters mit der Reckstange in einer die Dichtwirkung der Reckstangendichtung aufhebenden Position,
- Fig. 8:: eine schematische Schnittdarstellung eines Ausschnitts einer Vorrichtung zum Herstellen eines mit flüssigem Füllgut befüllten Behälters mit angehobenem Füllventil nach dem Füllen und Formen des Behälters,
- Fig. 9:: eine schematische Schnittdarstellung eines Ausschnitts einer Vorrichtung zum Herstellen eines mit flüssigem Füllgut befüllten Behälters mit zugeführter Verschlusskappe,
- Fig. 10:: eine schematische Schnittdarstellung eines Ausschnitts einer Vorrichtung zum Herstellen eines mit flüssigem Füllgut befüllten Behälters mit aufgenommener Verschlusskappe,
- Fig. 11:: eine schematische teilgeschnittene Ansicht einer weiteren Ausführungsform einer Vorrichtung zum Herstellen eines mit flüssigem Füllgut befüllten Behälters mit zugeführtem Vorformling,
- Fig. 12:: eine schematische teilgeschnittene Ansicht der in Fig. 11 gezeigten Ausführungsform der Vorrichtung mit der Reckstange in einer die Dichtwirkung der Reckstangendichtung aufhebenden Position,
- Fig. 13:: eine perspektivische Ansicht einer Reckstangendichtung mit mehreren Ausnehmungen,
- Fig. 14:: eine schematische Darstellung eines Verfahrens zum Herstellen eines mit flüssigem Füllgut befüllten Behälters aus einem thermisch konditionierten Vorformling,
- Fig. 15:: eine schematische Darstellung eines Verfahrens zum Herstellen eines mit flüssigem Füllgut befüllten Behälters aus einem thermisch konditionierten Vorformling.

In den Figuren sind gleiche oder im Wesentlichen funktionsgleiche bzw. -ähnliche Elemente mit den gleichen Bezugszeichen bezeichnet. Ein Behälter ist in Figuren nicht dargestellt, da solche Behälter in vielfältiger Art aus dem Stand der Technik bekannt sind, z.B. im Form einer PET-Flasche, und das Aussehen des Behälters für die Erfindung unbeachtlich ist.

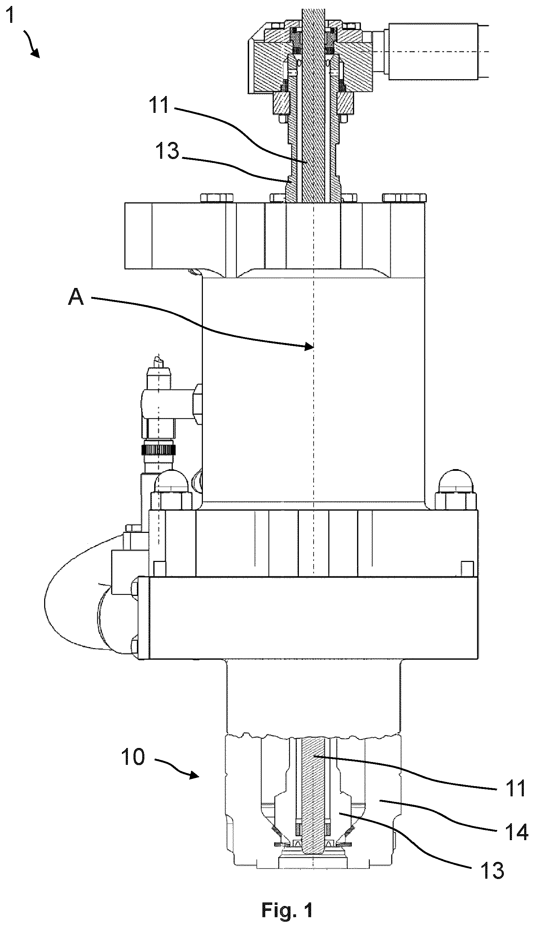

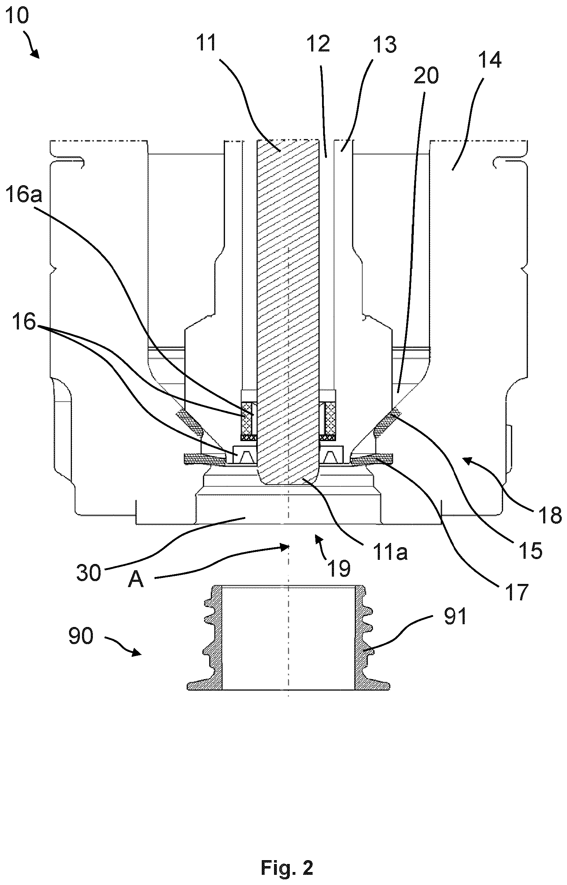

Fig. 1 zeigt eine Vorrichtung 1 zum Herstellen eines mit flüssigem Füllgut befüllten Behälters. In dem Ventilkörper 13 ist eine Reckstange 11 angeordnet. Die Reckstange 11, und der Ventilkörper 13 erstrecken sich entlang einer Längsachse A. Die Reckstange erstreckt sich im dargestellten Beispiel koaxial in dem Ventilkörper 13 entlang der Längsachse A. Der hier unten geschnitten dargestellte Bereich der Vorrichtung 1 wird als Auslassbereich 10 bezeichnet, der im Detail anhand der folgenden Figuren, insbesondere Fig. 2 bis 10, weiter beschrieben wird.

Fig. 2 bis Fig. 10 zeigen jeweils eine Detailansicht der in Fig. 1 gezeigten Vorrichtung 1, wobei jeweils der Auslassbereich 10 der Vorrichtung dargestellt ist. Fig. 2 bis Fig. 10 zeigen dabei unterschiedliche Zustände einer bevorzugten Ausführungsform der Vorrichtung, anhand derer ein typischer Verfahrensablauf zum Formen und Füllen eines Vorformlings mit Füllgut beschrieben wird.

Die Vorrichtung ist ausgebildet zum Herstellen eines mit flüssigem Füllgut F befüllten Behälters aus einem thermisch konditionierten Vorformling 90 (hier sowie in den anderen Figuren nur teilweise dargestellt anhand des mit einem Gewinde versehenen Mündungsbereiches) mittels Einleiten eines Füllguts F unter Druck in den Vorformling. Der Vorformling 90 ist in der hier gezeigten Stellung beabstandet zum Auslassbereich 10 der Vorrichtung angeordnet. Der Vorformling 90, der beispielsweise aus PET bestehen kann, weist einen Mündungsbereich 91 mit einem Gewinde auf, auf den ein Deckel aufgesetzt werden kann. In nicht dargestellter und aus dem Stand der Technik bekannter Weise ist der Vorformling von einer umgebenden Form gehalten, gegen deren Innenkontur der nicht in Figur 2 dargestellte Bereich des Vorformlings in axialer und Umfangsrichtung expandiert wird.

In dem Auslassbereich 10 ist ein Füllventil angeordnet, das hier durch eine Hülse 14, einen in der Hülse 14 angeordneten und axial entlang der Längsachse A bewegbaren Ventilkörper 13 und eine Kegeldichtung 15, die mit der Hülse 14 verbunden ist und als Ventilsitz fungiert, gebildet wird. Unter einem Ventilsitz ist dabei insbesondere der Bereich der Kegeldichtung 15 zu verstehen, an dem der Ventilkörper 13 in der hier gezeigten Schließstellung zur Anlage mit der Kegeldichtung 15 kommt. In der hier gezeigten Schließstellung des Ventilkörpers 13 ist das Füllventil geschlossen. Dabei liegt die Kegeldichtung 15 des Füllventils dichtend an dem Ventilkörper 13 an, sodass kein Füllgut zwischen Ventilkörper 13 und Hülse 14 in Richtung des Vorformlings 90 geleitet werden kann. Das Füllventil ist entlang der Längsachse A bewegbar. Das Füllventil steht in der in Fig. 2 gezeigten Stellung in der Neutralstellung, in der das Füllventil beabstandet zu dem Vorformling 90 angeordnet ist.

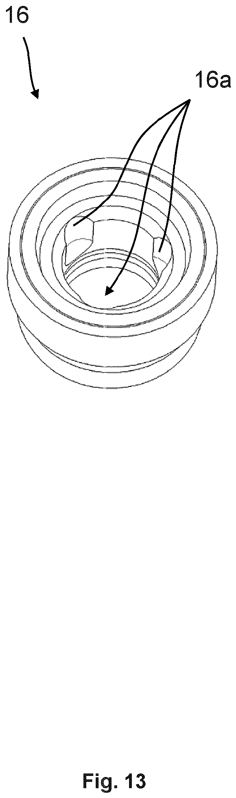

Der Ventilkörper 13 beherrscht ein Zustromlumen 20 des Füllventils. Der Ventilkörper 13 ist relativ zu dem Füllventil aus einer Dichtstellung, in der eine Verbindung zwischen dem Zustromlumen 20 und dem Vorformling 90 verschlossen ist, in eine Freigabestellung bringbar. In der in Fig. 2 gezeigten Stellung ist der Ventilkörper 13 in der Dichtstellung angeordnet. Innerhalb des Ventilkörpers 13 ist eine sich entlang der Längsachse A erstreckende Reckstange 11 angeordnet, die entlang der Längsachse A relativ zum Ventilkörper 14 axial bewegbar ist, z.B. zum Recken des Vorformlings 90. Die Reckstange 11 weist auslassseitig eine Reckstangenspitze 11a auf. Zwischen der Reckstange 11 und dem Ventilkörper 13 ist eine Reckstangendichtung 16 angeordnet. Die Reckstangendichtung ist hier zweiteilig dargestellt, sie kann allerdings auch einteilig ausgebildet sein (siehe Fig. 13). Die Reckstangendichtung 16 trennt einen auslassseitigen Raum 30 von einem auslassabgewandten Raum 12. In der in Fig. 2 gezeigten Position der Reckstange 11 besteht keine Fluidverbindung zwischen dem auslassseitigen Raum 30 von dem auslassabgewandten Raum 12, sodass kein Druckausgleich zwischen diesen beiden Räumen mittels einer Verbindung dieser beiden Räume möglich ist.

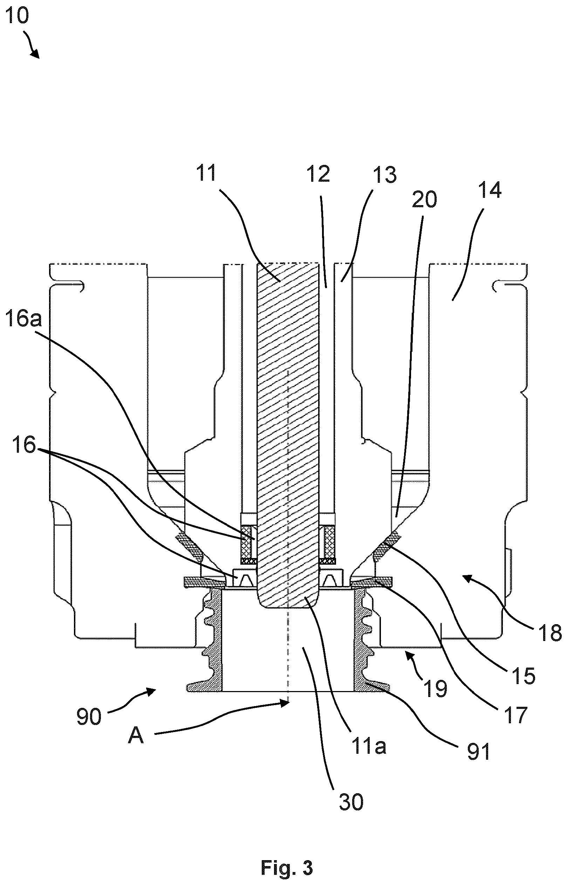

Fig. 3 zeigt den Auslassbereich 10 der Vorrichtung, wobei das Füllventil nun abgesenkt wurde und in der Füllstellung angeordnet ist, in der das Füllventil mit seinem Auslass 19 dichtend an dem Vorformling 90 anliegt. Ein dichtendes Anliegen des Füllventils an dem Vorformling 90 wird mittels einer Auslassdichtung 17 ermöglicht, die mit der Hülse 14 verbunden ist. Der Mündungsbereich 91 des Vorformlings 90 liegt dichtend an der Auslassdichtung 17 an, sodass bei einem Einleiten von Füllgut dieses vollständig in den Vorformling eingeleitet werden kann und nicht außerhalb des Mündungsbereiches 91 austritt. Das Füllventil befindet sich hier noch in der Dichtstellung.

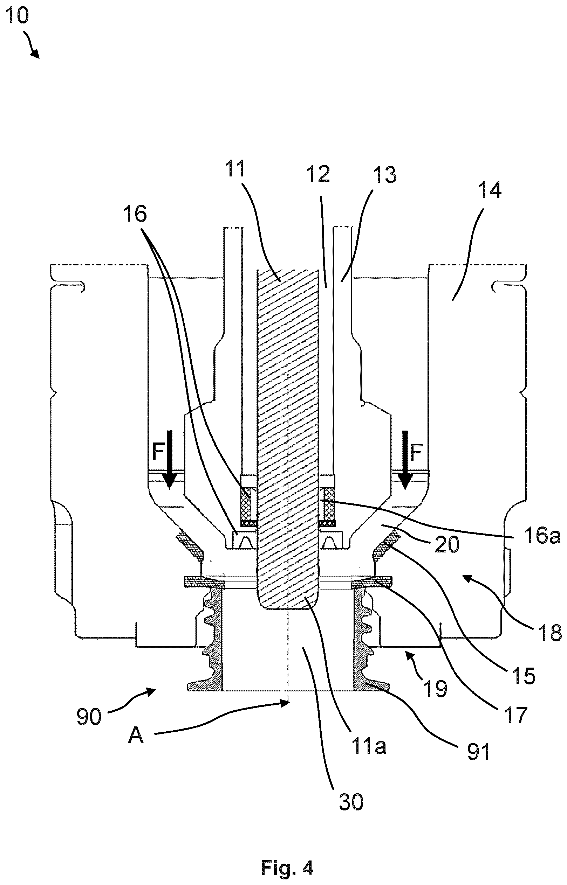

In Fig. 4 ist das Füllventil in der Freigabestellung angeordnet. Dazu wurde der Ventilkörper 13 relativ zu der Hülse 14 entlang der Längsachse A angehoben. Nun kann Füllgut F, beispielsweise Wasser, unter Druck über das Zustromlumen 20 in den auslassseitigen Raum 30 und somit in den Vorformling 90 eingeleitet werden. Die Strömungsrichtung des Füllguts F ist anhand der gezeigten Pfeilrichtung erkennbar. Der Vollständigkeit halber sei zu dieser Figur 4 angemerkt, dass in aller Regel und anders als dargestellt zu dem in Figur 4 dargestellten Zeitpunkt die Reckstange 11 in den Vorformling 90 eingefahren ist und den Vorformling in Richtung der Längsachse A reckt oder unmittelbar mit dem Recken beginnen kann.

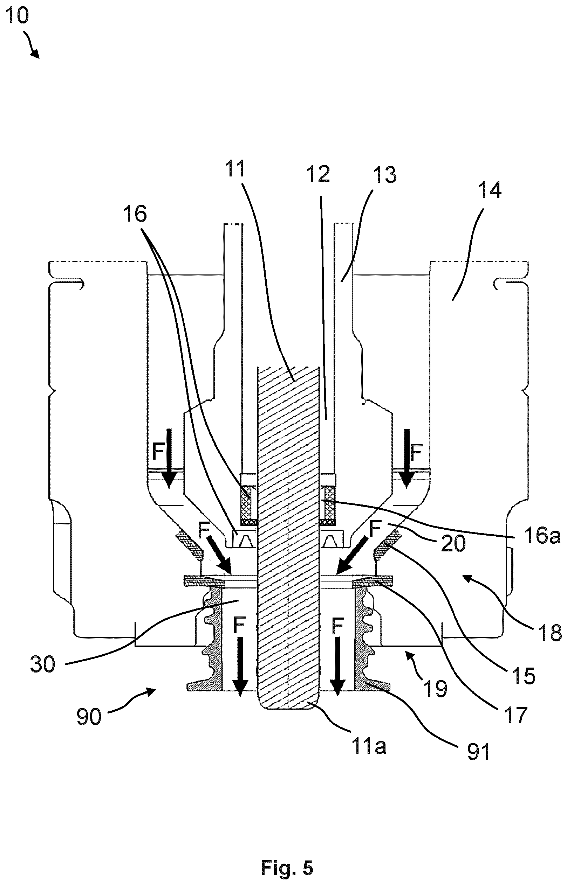

Fig. 5 zeigt in einem nächsten Schritt, dass nun parallel zum Einleiten des Füllguts F in den Vorformling 90 die Reckstange 11 entlang der Längsachse A in Richtung des Vorformlings 90 bewegt wird, um den Vorformling 90 zu recken, also in Richtung der Längsachse A zu strecken. Wie bereits zu Figur 4 erläutert, erfolgt das Einströmen des Füllgutes F in den Vorformling simultan zum Recken des Vorformlings und somit etwas abweichend vom dargestellten Zustand.

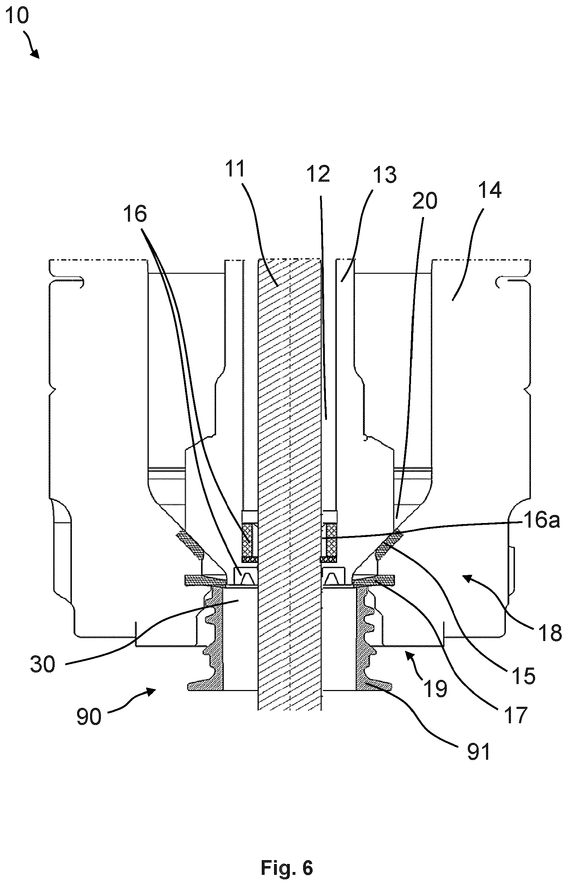

Fig. 6 zeigt die Reckstange 11 in einer in den Vorformling 90 hineinbewegten Position. Der Ventilkörper wurde nun nach erfolgtem Formen und Befüllen des Behälters wieder in Richtung des Auslasses und somit von der Freigabestellung in die Dichtstellung bewegt, sodass die Verbindung zwischen dem Zustromlumen 20 und dem Behälter wieder verschlossen ist. Zu diesem Zeitpunkt ist der Vorformling in der Regel vollständig in den Behälter umgeformt worden und die Reckstange hat den Reckweg vollständig zurückgelegt. Anschließend wird die Reckstange aus dem Behälter herausgezogen. Im auslassseitigen Raum 30 kann dann nach dem Formen und Füllen ein Überdruck oder Unterdruck relativ zum Umgebungsdruck auftreten.

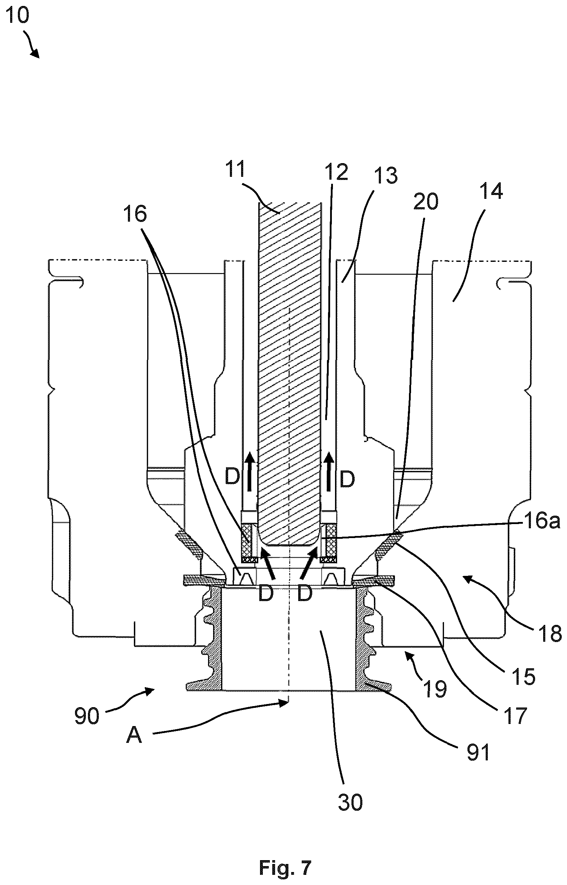

Fig. 7 zeigt, wie die Reckstange 11 einen Entlüftungshub ausführt. Dazu wird die Reckstange 11 angehoben bzw. in die auslassabgewandte Richtung entlang der Längsachse A bewegt, während das Füllventil in der Füllstellung positioniert ist und der Ventilkörper 13 in der Dichtstellung positioniert ist. Die Reckstange 11 wird dabei so weit bewegt, dass die Reckstange in einer die Dichtwirkung der Reckstangendichtung 16 aufhebenden und die Trennung der beiden Räume (auslassseitiger Raum 30 und auslassabgewandter Raum 12) aufhebenden Position angeordnet ist. Aufgrund der aufgehobenen Dichtwirkung der Reckstangendichtung 16 besteht eine Gasverbindung zwischen dem auslassseitigen Raum 30 und dem auslassabgewandten Raum 12, sodass bei Vorliegen einer Druckdifferenz der Drücke in den beiden Räumen ein Druckausgleich D stattfindet, wobei beispielsweise im Falle eines Überdrucks im auslassseitigen Raum 30 ein Gastransfer in Richtung des auslassabgewandten Raums 12 stattfindet, wie mit den Pfeilrichtungen dargestellt.

In der hier gezeigten Ausführungsform weist die Reckstangendichtung 16 Ausnehmungen 16a auf, die am Innenumfang der Reckstangendichtung 16 im auslassabgewandten Bereich der Reckstangendichtung 16 angeordnet sind. Aufgrund der Ausnehmungen 16a muss die Reckstange 11 nicht vollständig aus der Reckstangendichtung 16 herausbewegt werden, denn bereits in der hier in Fig. 7 gezeigten Position der Reckstange 11, in der die Reckstangenspitze bezogen auf die Längsachse parallel zu einem auslassabgewandten Bereich der Reckstangendichtung angeordnet ist, kann von dem auslassseitigen Raum 30 über die Ausnehmungen 16a zwischen der Reckstange 11 und der Reckstangendichtung 16 eine Gasverbindung zum auslassabgewandten Raum 12 hergestellt werden, wodurch ein Gasaustausch und somit ein Druckausgleich ermöglicht wird.

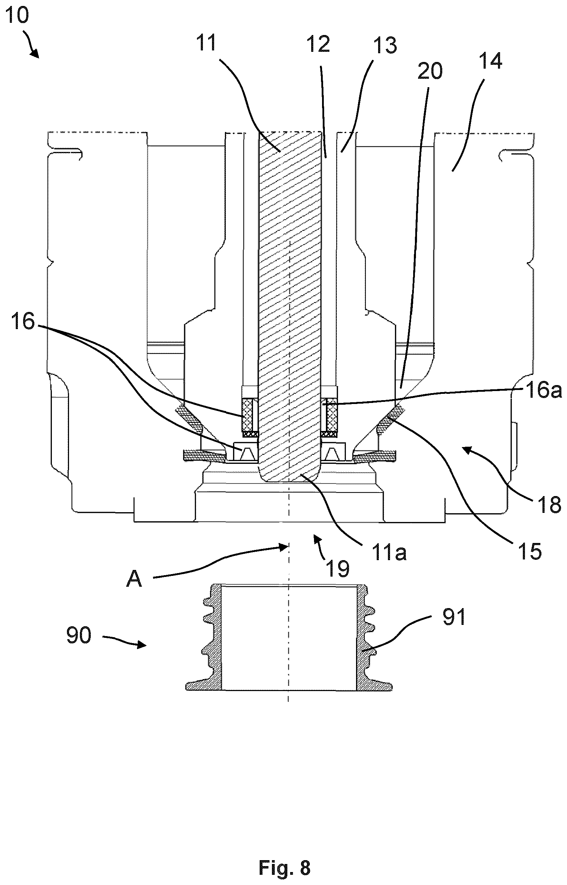

Anschließend wird, wie in Fig. 8 gezeigt, die Reckstange 11 wieder in eine Position bewegt, in der die Dichtwirkung der Reckstangendichtung wieder besteht. Das Füllventil wird dann in die Neutralstellung bewegt, in der das Füllventil beabstandet zu dem dann gefüllten und geformten Behälter angeordnet ist.

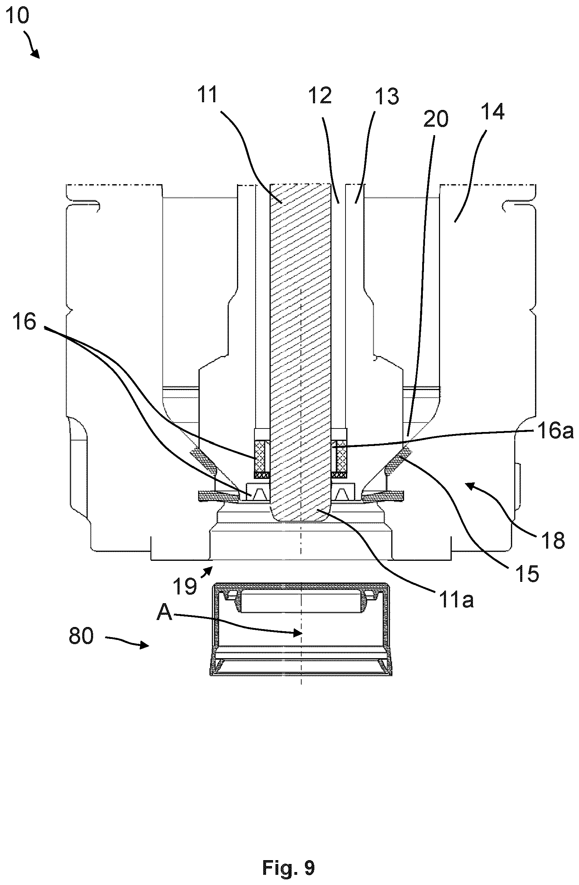

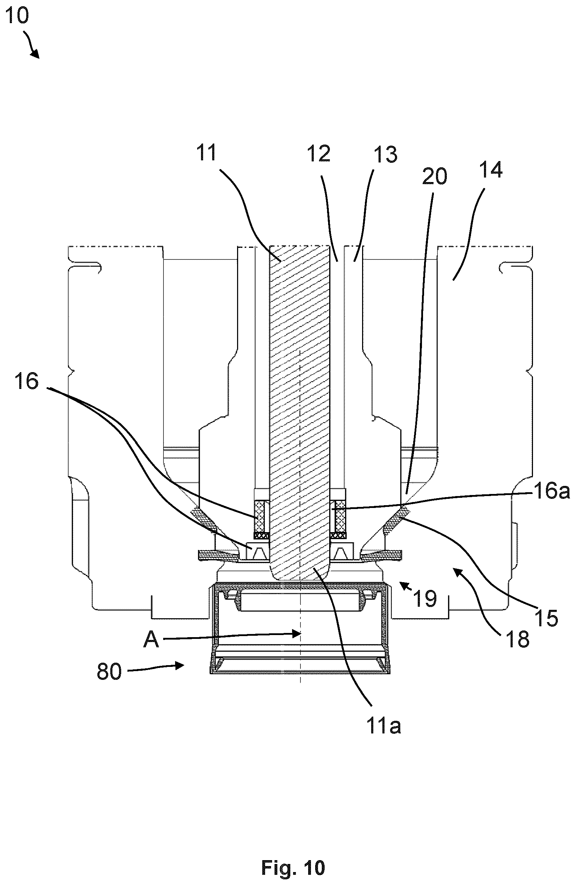

Anschließend an ein anhand von Fig. 2 bis Fig. 8 beispielhaft beschriebenes Verfahren kann noch eine Verschlusskappe auf den geformten und gefüllten Behälter aufgesetzt bzw. aufgedrückt werden. Fig. 9 zeigt eine zugeführte Verschlusskappe 80, die wie in Fig. 10 gezeigt mittels des Füllventils, insbesondere mittels der Hülse 14, und/oder der Reckstangenspitze 11a auf den Mündungsbereich des ausgeformten und gefüllten Behälters aufgedrückt werden kann.

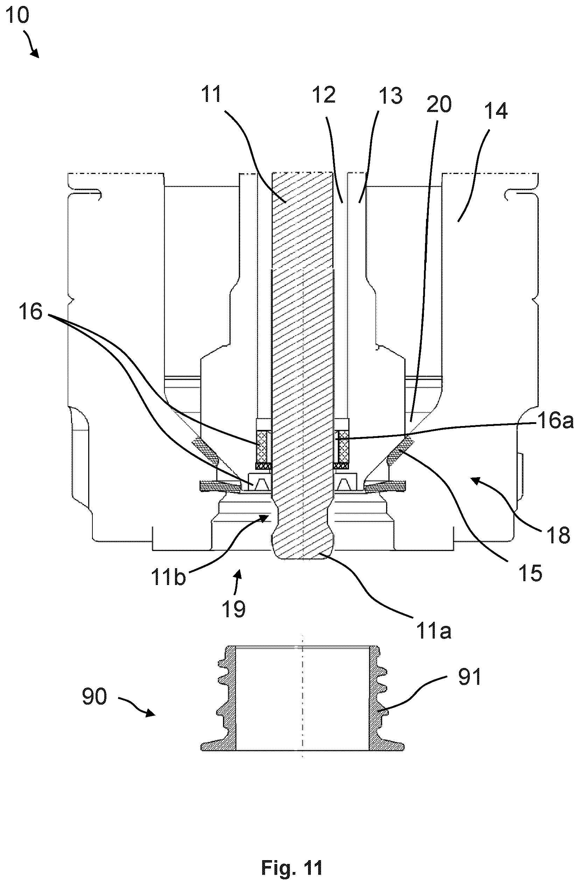

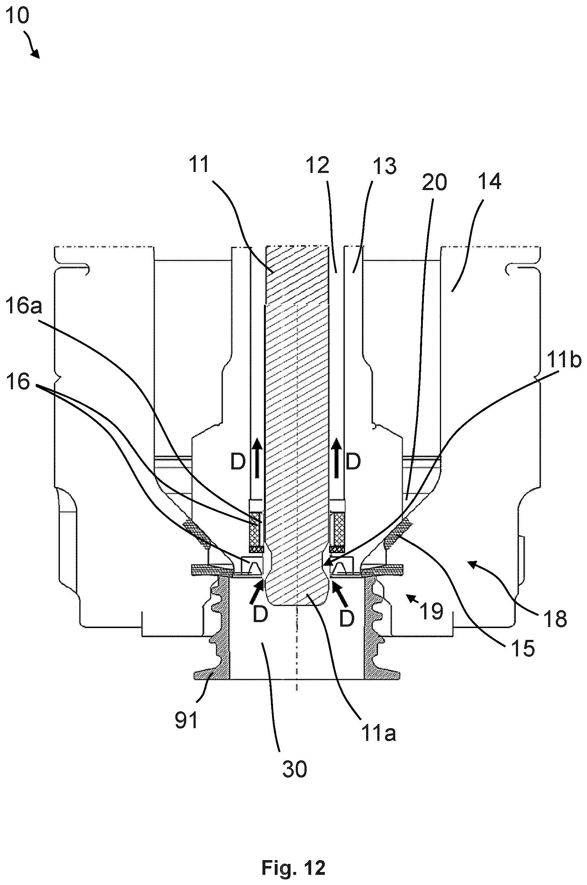

Fig. 11 und Fig. 12 zeigen eine alternative Ausführungsform einer Vorrichtung, wobei nur die Reckstange abweichend zu der in den Fig. 2 bis Fig. 10 gezeigten Ausführungsform ausgeführt ist.

Die in Fig. 11 gezeigte Vorrichtung entspricht somit der in Fig. 2 gezeigten und anhand Fig. 2 beschriebenen Vorrichtung, mit dem einzigen Unterschied, dass die Reckstange 11 in der in Fig. 11 gezeigten Ausführungsform eine Querschnittsverjüngung 11b in ihrem Spitzenbereich aufweist. Diese Querschnittsverjüngung 11b hat hier die Form einer abschnittsweisen Taillierung der Reckstange 11. Die Querschnittsverjüngung ist im auslassseitigen Bereich der Reckstange und nahe der Reckstangenspitze 11a angeordnet.

In Fig. 12 ist die Reckstange 11 entsprechend einem wie in Fig. 2 bis Fig. 10 beschriebenen Verfahren aus dem gefüllten und geformten Behälter herausbewegt worden. Aufgrund der Querschnittsverjüngung 11b muss die Reckstange 11 nicht so weit nach oben bewegt werden (Entlüftungshub) wie in der in Fig. 7 gezeigten Ausführungsform, um eine Gasverbindung zwischen dem auslassseitigen Raum 30 und dem auslassabgewandten Raum 12 für einen Druckausgleich bereitzustellen. Der Druckausgleich kann hier entlang einer Verbindung von dem auslassseitigen Raum 30 zwischen der Reckstange 11 und der Reckstangendichtung 16 über eine durch die Querschnittsverjüngung 11b und die Ausnehmungen 16a zu dem auslassabgewandten Raum 12 bereitgestellte Verbindung ermöglicht werden.

Alternativ zu der hier dargestellten Ausführungsform, bei der die Reckstangendichtung Ausnehmungen aufweist und die Reckstange eine Querschnittsverjüngung aufweist, ist auch eine Ausführungsform mit einer Reckstangendichtung ohne Ausnehmungen und einer Reckstange mit Querschnittsverjüngung denkbar.

Fig. 13 zeigt ein Beispiel für eine Reckstangendichtung 16, nämlich eine Reckstangendichtung 16 mit drei äquidistant angeordneten Ausnehmungen 16a, die am Innenumfang der Reckstangendichtung 16 und im oberen Bereich, also einem an den auslassabgewandten Raum angrenzenden Abschnitt, der Reckstangendichtung angeordnet sind. Die hier beispielhaft gezeigten Ausnehmungen sind nutförmig ausgeführt.

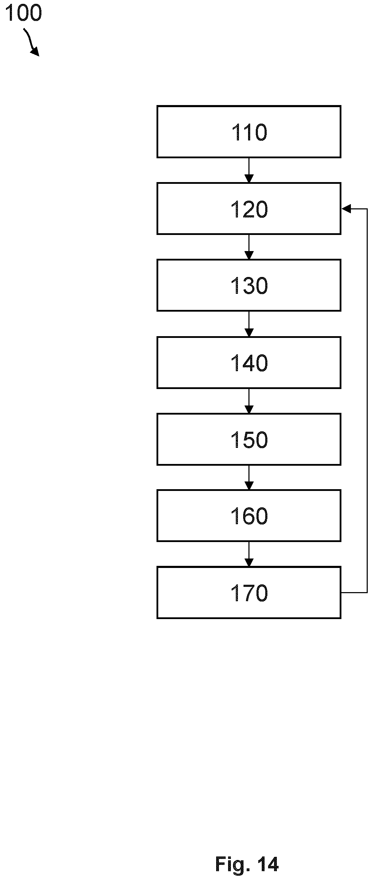

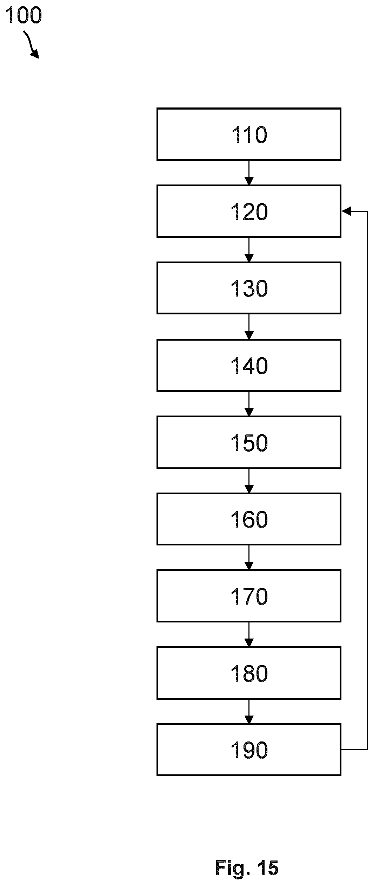

Anhand von Fig. 14 und Fig. 15 werden beispielhaft zwei Verfahren zum Herstellen eines mit flüssigem Füllgut befüllten Behälters aus einem thermisch konditionierten Vorformling beschrieben.

Fig. 14 zeigt einen Ablauf eines beispielhaften Verfahrens 100 mit den folgenden Schritten:

In einem Schritt 110, Bereitstellen einer Vorrichtung zum Herstellen eines mit flüssigem Füllgut befüllten Behälters aus einem thermisch kontrollierten Vorformling. Eine solche Vorrichtung kann insbesondere wie in Fig. 1 gezeigt aufgebaut sein und einen anhand Fig. 2 beschriebenen Auslassbereich aufweisen.

In einem Schritt 120, Bewegen eines Füllventils zum Einleiten des Füllgutes in den Vorformling unter Druck entlang einer Längsachse von einer Neutralstellung, in der das Füllventil beabstandet zu einem Vorformling steht, in eine Füllstellung, in der das Füllventil mit seinem Auslass dichtend an einem Vorformling anliegt. Das Füllventil ist in Fig. 2 (und in einer alternativen Ausführungsform in Fig. 11) in der Neutralstellung angeordnet und wird dann in die in Fig. 3 gezeigte Füllstellung bewegt.

In einem Schritt 130, Bewegen eines Ventilkörpers, der ein Zustromlumen des Füllventils beherrscht, axial entlang der Längsachse und innerhalb des Füllventils aus einer Dichtstellung, also die Verbindung zwischen dem Zustromlumen und dem Vorformling verschließenden Stellung, in eine Freigabestellung, in der eine Fluidverbindung zwischen dem Zustromlumen und dem Vorformling besteht. Der Ventilkörper ist in Fig. 3 in der Dichtstellung angeordnet und wird dann in die in Fig. 4 gezeigte Freigabestellung bewegt.

In einem Schritt 140, Ausformen und Füllen des Behälters, wobei das Füllventil in der Füllstellung angeordnet ist und der Ventilkörper in der Freigabestellung angeordnet ist, mittels zumindest zeitweise gleichzeitig ausgeführtem Einleiten eines Fluides durch das Zustromlumen in den Vorformling, und Bewegen der Reckstange entlang der Längsachse entlang eines Reckweges, wodurch der Vorformling entlang der Längsachse gereckt wird.

In Fig. 5 wird das Fluid durch das Zustromlumen in den Vorformling eingeleitet und die Reckstange zum Recken des Vorformlings in Richtung des Vorformlings bewegt.

In einem Schritt 150, Bewegen des Ventilkörpers aus der Freigabestellung in die Dichtstellung, also die Verbindung zwischen dem Zustromlumen und dem Vorformling verschließenden Stellung. Der Ventilkörper wird somit wieder in die in Fig. 6 gezeigte Stellung bewegt.

In einem Schritt 160, Bewegen der Reckstange zum Recken des konditionierten Vorformlings in eine die Dichtwirkung einer Reckstangendichtung, die zwischen dem Ventilkörper und der Reckstange angeordnet ist und die einen auslassseitigen Raum von einem auslassabgewandten Raum trennt, aufhebende und die Trennung der beiden Räume aufhebende Position. Diese die Dichtwirkung der Reckstangendichtung aufhebende Position der Reckstange ist in Fig. 7 (und in einer alternativen Ausführungsform in Fig. 12) gezeigt. Diese Bewegung kann als Entlüftungshub bezeichnet werden.

In einem Schritt 170, Bewegen des Füllventils von der Füllstellung in die Neutralstellung. Das Füllventil ist dann nach dem Formen und Füllen des Behälters wie in Fig. 8 gezeigt wieder in der Neutralstellung angeordnet.

Fig. 15 zeigt einen Ablauf eines beispielhaften Verfahrens 100, das die anhand Fig. 14 beschriebenen Schritte aufweist und zusätzlich folgende Schritte umfasst, die anschließend an das in Fig. 14 beschriebene Verfahren ausgeführt werden können.

In einem Schritt 180, Zuführen einer Verschlusskappe (siehe Fig. 9). Und in einem Schritt 190, Aufsetzen bzw. Aufdrücken der Verschlusskappe auf den geformten und gefüllten Behälter (siehe Fig. 10).

### Bezugszeichenliste

- 1: Vorrichtung
- 10: Auslassbereich
- 11: Reckstange
- 11a: Reckstangenspitze
- 11b: Querschnittsverjüngung
- 12: auslassabgewandter Raum
- 13: Ventilkörper
- 14: Hülse
- 15: Kegeldichtung
- 16: Reckstangendichtung
- 16a: Ausnehmungen
- 17: Auslassdichtung
- 18: Füllventil
- 19: Auslass
- 20: Zustromlumen
- 30: auslassseitiger Raum
- 80: Verschlusskappe
- 90: Vorformling
- 91: Mündungsbereich
- 100: Verfahren
- 110-190: Verfahrensschritte
- A: Längsachse
- D: Druckausgleich
- F: Füllgut

## Patentansprüche

1. Vorrichtung (1) zum Herstellen eines mit flüssigem Füllgut (F) befüllten Behälters aus einem thermisch konditionierten Vorformling (90) mittels Einleiten eines Füllguts (F) unter Druck in den Vorformling (90), umfassend
- ein Füllventil (18) für das Einleiten des Füllgutes (F) unter Druck in den Vorformling (90), das entlang einer Längsachse (A) zwischen einer Füllstellung, in der das Füllventil (18) mit seinem Auslass (19) dichtend an einem Vorformling (90) anliegt, und einer Neutralstellung, in der das Füllventil (18) beabstandet zu einem Vorformling (90) steht, beweglich ist,
- einen entlang der Längsachse (A) und innerhalb des Füllventils (18) axial bewegbaren Ventilkörper (13), der ein Zustromlumen (20) des Füllventils (18) beherrscht und relativ zu dem Füllventil (18) aus einer Dichtstellung, also die Verbindung zwischen dem Zustromlumen (20) und dem Vorformling (90) verschließenden Stellung, in eine Freigabestellung bringbar ist, in der eine Fluidverbindung zwischen dem Zustromlumen (20) und dem Vorformling (90) besteht,
- eine sich innerhalb des Ventilkörpers (13) entlang der Längsachse (A) erstreckende Reckstange (11), die entlang der Längsachse (A) relativ zum Ventilkörper (13) axial bewegbar ist zum Recken des Vorformlings (90), mit einer auslassseitigen Reckstangenspitze (11a), und
- eine Reckstangendichtung (16), die zwischen dem Ventilkörper (13) und der Reckstange (11) angeordnet ist und die einen auslassseitigen Raum (30) von einem auslassabgewandten Raum (12) trennt,
**dadurch gekennzeichnet, dass**
die Reckstange (11) während der Positionierung des Füllventils (18) in der Füllstellung und des Ventilkörpers (13) in der Dichtstellung in eine die Dichtwirkung der Reckstangendichtung (16) aufhebende und die Trennung der beiden Räume (30, 12) aufhebende Position beweglich ist.

2. Vorrichtung nach dem vorhergehenden Anspruch,
wobei die Reckstange (11), insbesondere axial entlang der Längsachse (A), relativ zur Reckstangendichtung (16) bewegbar ist und/oder
wobei die Reckstangendichtung (16) an dem Ventilkörper (13) angeordnet ist und mit dem Ventilkörper (13), vorzugsweise kraft- und/oder formschlüssig, verbunden ist.

3. Vorrichtung nach einem der vorhergehenden Ansprüche,
wobei in der die Dichtwirkung der Reckstangendichtung (16) aufhebenden und die Trennung der beiden Räume (30, 12) aufhebenden Position der Reckstange (11) die auslassseitige Reckstangenspitze (11a) bezogen auf die Längsachse (A)
- in Höhe eines an den auslassabgewandten Raum (12) angrenzenden Abschnitts der Reckstangendichtung (16), insbesondere parallel zu dem den auslassabgewandten Raum (12) angrenzenden Abschnitt der Reckstangendichtung (16),
oder
- beabstandet zu einem an den auslassabgewandten Raum (12) angrenzenden Abschnitt der Reckstangendichtung (16), insbesondere in dem auslassabgewandten Raum (12),
angeordnet ist.

4. Vorrichtung nach einem der vorhergehenden Ansprüche,
wobei der auslassabgewandte Raum (12) mit der die Vorrichtung umgebenden Umgebungsluft gastechnisch verbunden und/oder verbindbar ist, zur Belüftung und/oder Entlüftung des auslassabgewandten Raums (12) mittels der Umgebungsluft,
und/oder
wobei der auslassabgewandte Raum (12) mit einem Gas, insbesondere in Form von Luft, das in einem begrenzten Raum angeordnet ist, gastechnisch verbunden und/oder verbindbar ist, zur Belüftung und/oder Entlüftung des auslassabgewandten Raums (12) mittels des Gases.

5. Vorrichtung nach einem der vorhergehenden Ansprüche,
wobei die Reckstangendichtung (16) an ihrem Innenumfang eine Ausnehmung (16a) aufweist, die einen Abschnitt zwischen der Reckstange (11) und der Reckstangendichtung (16) ausbildet, an dem die Reckstange (11) und der Innenumfang der Reckstangendichtung (16) nicht in Kontakt stehen.

6. Vorrichtung nach dem vorhergehenden Anspruch,
wobei die Ausnehmung (16a) in jeder Position der Reckstange (11) mit dem auslassabgewandten Raum (12) verbunden ist, und/oder
wobei die Ausnehmung (16a) in der die Dichtwirkung der Reckstangendichtung (16) aufhebenden und die Trennung der beiden Räume aufhebenden Position der Reckstange (11) mit dem auslassseitigen Raum (30) verbunden ist, und/oder
wobei die Ausnehmung (16a) in Form einer Nut ausgebildet ist, die parallel zu der Längsachse (A) am Innenumfang der Reckstangendichtung (16) vom auslassabgewandten Raum (12) in Richtung des auslassseitigen Raums (30) verläuft, wobei die Ausnehmung (16a) vorzugsweise nicht bis zum auslassseitigen Raum (30) verläuft, und/oder
wobei die Reckstangendichtung (16) mehrere, insbesondere drei, Ausnehmungen (16a) aufweist, die vorzugsweise äquidistant zueinander und jeweils am Innenumfang der Reckstangendichtung (16) angeordnet sind.

7. Vorrichtung nach einem der vorhergehenden Ansprüche,
wobei die Reckstange (11) eine Querschnittsverjüngung (11b) aufweist, die ausgebildet ist, um in der die Dichtwirkung der Reckstangendichtung (16) aufhebenden Position eine Verbindung zwischen dem auslassseitigen Raum (30) und dem auslassabgewandten Raum (12) bereitzustellen.

8. Vorrichtung nach dem vorhergehenden Anspruch,
wobei die Querschnittsverjüngung (11b) im Bereich der auslassseitigen Reckstangenspitze (11a) angeordnet ist und vorzugsweise in Form einer umlaufenden Nut ausgebildet ist,
wobei die Querschnittsverjüngung (11b) in Richtung der Längsachse (A) vorzugsweise höchstens 10 cm, besonders bevorzugt höchstens 5 cm, insbesondere höchstens 3 cm von der auslassseitigen Reckstangenspitze (11a) beabstandet ist.

9. Vorrichtung nach einem der Ansprüche 7-8,
wobei die Reckstange (11) in Richtung der Längsachse (A) zu beiden Seiten der Querschnittsverjüngung (11b) den gleichen Querschnitt aufweist, der größer ist als der Querschnitt im Bereich der Querschnittsverjüngung (11b).

10. Vorrichtung nach einem der vorhergehenden Ansprüche,
wobei die Reckstange (11) in eine Reckposition bewegbar ist, in der die Reckstangendichtung (16) ausgebildet ist, um eine fluiddichte, insbesondere gasdichte, Abdichtung zwischen den beiden Räumen (30, 12) herzustellen.

11. Anlage zum Herstellen von mit flüssigem Füllgut (F) befüllten Behältern aus thermisch konditionierten Vorformlingen (90) mittels Einleiten eines Füllguts (F) unter Druck in die Vorformlinge (90) mit einer Vorrichtung nach einem der vorhergehenden Ansprüche, vorzugsweise umfassend mehrere Form- und Füllstationen, wobei jede der Form- und Füllstationen eine Vorrichtung nach einem der vorhergehenden Ansprüche aufweist.

12. Verfahren (100) zum Herstellen eines mit flüssigem Füllgut (F) befüllten Behälters aus einem thermisch konditionierten Vorformling (90), umfassend die Schritte:
- Bereitstellen (110) einer Vorrichtung zum Herstellen eines mit flüssigem Füllgut (F) befüllten Behälters aus einem thermisch konditionierten Vorformling (90), insbesondere einer Vorrichtung nach einem der Ansprüche 1-10,
- Bewegen (120) eines Füllventils (18) zum Einleiten des Füllgutes (F) in den Vorformling (90) unter Druck entlang einer Längsachse (A) von einer Neutralstellung, in der das Füllventil (18) beabstandet zu einem Vorformling (90) steht, in eine Füllstellung, in der das Füllventil (18) mit seinem Auslass (19) dichtend an einem Vorformling (90) anliegt,
- Bewegen (150) eines Ventilkörpers (13), der ein Zustromlumen (20) des Füllventils (18) beherrscht, axial entlang der Längsachse (A) und innerhalb des Füllventils (18) aus einer Freigabestellung, in der eine Fluidverbindung zwischen dem Zustromlumen (20) und dem Vorformling (90) besteht, in eine Dichtstellung, also die Verbindung zwischen dem Zustromlumen (20) und dem Vorformling (90) verschließenden Stellung,
**gekennzeichnet durch**
- Bewegen (160) einer Reckstange (11) zum Recken des konditionierten Vorformlings (90), die sich innerhalb des Ventilkörpers (13) entlang der Längsachse (A) erstreckt, mit einer auslassseitigen Reckstangenspitze (11a) in eine die Dichtwirkung einer Reckstangendichtung (16), die zwischen dem Ventilkörper (13) und der Reckstange (11) angeordnet ist und die einen auslassseitigen Raum (30) von einem auslassabgewandten Raum (12) trennt, aufhebende und die Trennung der beiden Räume (30, 12) aufhebende Position.

13. Verfahren nach dem vorhergehenden Anspruch, umfassend
- Ausformen und Füllen (140) des Behälters, wobei das Füllventil (18) in der Füllstellung angeordnet ist und der Ventilkörper (13) in der Freigabestellung angeordnet ist, mittels zumindest zeitweise gleichzeitig ausgeführtem
∘ Einleiten eines Fluides durch das Zustromlumen (20) in den Vorformling (90), und
∘ Bewegen der Reckstange (11) entlang der Längsachse (A) entlang eines Reckweges, wodurch der Vorformling (90) entlang der Längsachse (A) gereckt wird.

14. Verfahren nach einem der Ansprüche 12-13, wobei die Reckstange (11) mittels eines Entlüftungshubs in die die Dichtwirkung der Reckstangendichtung (16) aufhebende und die Trennung der beiden Räume (30, 12) aufhebende Position bewegt wird, indem die Reckstange (11) in die auslassabgewandte Richtung bewegt wird, sodass die auslassseitige Reckstangenspitze (11a) bezogen auf die Längsachse (A)
- in Höhe eines an den auslassabgewandten Raum (12) angrenzenden Abschnitts der Reckstangendichtung (16), insbesondere parallel zu dem an den auslassabgewandten Raum (12) angrenzenden Abschnitt der Reckstangendichtung (16),
oder
- beabstandet zu einem an den auslassabgewandten Raum (12) angrenzenden Abschnitt der Reckstangendichtung (16), insbesondere in dem auslassabgewandten Raum (12),
bewegt wird.

15. Verwendung einer Vorrichtung nach einem der Ansprüche 1-10 und/oder einer Anlage nach Anspruch 11 zum Herstellen von mit flüssigem Füllgut (F) befüllten Behältern aus thermisch konditionierten Vorformlingen (90) mittels Einleiten eines Füllguts (F) unter Druck in die Vorformlinge (90), insbesondere zum Herstellen von mit flüssigem Füllgut (F), beispielsweise Trinkwasser, befüllten Flaschen aus einem thermoplastischen Material, insbesondere umfassend oder bestehend aus PET.

## Claims

1. Device (1) for producing a container filled with liquid filling material (F) from a thermally conditioned preform (90) by introducing a filling material (F) under pressure into the preform (90), comprising
- a filling valve (18) for introducing the filling material (F) under pressure into the preform (90), which is movable along a longitudinal axis (A) between a filling position, in which the filling valve (18) sealingly abuts with its outlet (19) against a preform (90), and a neutral position, in which the filling valve (18) is spaced apart from a preform (90),
- a valve body (13) which is axially movable along the longitudinal axis (A) and within the filling valve (18), which controls an inflow lumen (20) of the filling valve (18) and is movable relative to the filling valve (18) from a sealing position, i.e. a position closing the connection between the inflow lumen (20) and the preform (90), into a release position in which a fluid connection exists between the inflow lumen (20) and the preform (90),
- a stretching rod (11) extending within the valve body (13) along the longitudinal axis (A), which is axially movable along the longitudinal axis (A) relative to the valve body (13) for stretching the preform (90), with an outlet-side stretching rod tip (11a), and
- a stretching rod seal (16) arranged between the valve body (13) and the stretching rod (11), which separates an outlet-side space (30) from an outlet-remote space (12),
**characterized in that**
the stretching rod (11) is movable, during positioning of the filling valve (18) in the filling position and of the valve body (13) in the sealing position, into a position which cancels the sealing effect of the stretching rod seal (16) and cancels the separation of the two spaces (30, 12).

2. Device according to the preceding claim,
wherein the stretching rod (11), in particular axially along the longitudinal axis (A), is movable relative to the stretching rod seal (16), and/or
wherein the stretching rod seal (16) is arranged on the valve body (13) and is connected to the valve body (13), preferably in a force-locking and/or form-locking manner.

3. Device according to one of the preceding claims,
wherein, in the position of the stretching rod (11) cancelling the sealing effect of the stretching rod seal (16) and cancelling the separation of the two spaces (30, 12), the outlet-side stretching rod tip (11a), with respect to the longitudinal axis (A),
- is arranged at the level of a section of the stretching rod seal (16) adjacent to the outlet-remote space (12), in particular parallel to the section of the stretching rod seal (16) adjacent to the outlet-remote space (12),
or
- is arranged spaced apart from a section of the stretching rod seal (16) adjacent to the outlet-remote space (12), in particular in the outlet-remote space (12).

4. Device according to one of the preceding claims,
wherein the outlet-remote space (12) is and/or can be connected in terms of gas to the ambient air surrounding the device, for ventilating and/or venting the outlet-remote space (12) by means of the ambient air,
and/or
wherein the outlet-remote space (12) is and/or can be connected in terms of gas to a gas, in particular in the form of air, which is arranged in a confined space, for ventilating and/or venting the outlet-remote space (12) by means of the gas.

5. Device according to one of the preceding claims,
wherein the stretching rod seal (16) has, on its inner circumference, a recess (16a) which forms a section between the stretching rod (11) and the stretching rod seal (16) at which the stretching rod (11) and the inner circumference of the stretching rod seal (16) are not in contact.

6. Device according to the preceding claim,
wherein the recess (16a) is connected to the outlet-remote space (12) in every position of the stretching rod (11), and/or
wherein the recess (16a) is connected to the outlet-side space (30) in the position of the stretching rod (11) cancelling the sealing effect of the stretching rod seal (16) and cancelling the separation of the two spaces, and/or
wherein the recess (16a) is formed as a groove which extends parallel to the longitudinal axis (A) on the inner circumference of the stretching rod seal (16) from the outlet-remote space (12) in the direction of the outlet-side space (30), wherein the recess (16a) preferably does not extend up to the outlet-side space (30), and/or
wherein the stretching rod seal (16) has a plurality of, in particular three, recesses (16a), which are preferably arranged equidistantly from one another and respectively on the inner circumference of the stretching rod seal (16).

7. Device according to one of the preceding claims,
wherein the stretching rod (11) has a cross-sectional reduction (11b) which is configured to provide a connection between the outlet-side space (30) and the outlet-remote space (12) in the position cancelling the sealing effect of the stretching rod seal (16).

8. Device according to the preceding claim,
wherein the cross-sectional reduction (11b) is arranged in the region of the outlet-side stretching rod tip (11a) and is preferably formed as a circumferential groove, wherein the cross-sectional reduction (11b), in the direction of the longitudinal axis (A), is preferably spaced at most 10 cm, more preferably at most 5 cm, in particular at most 3 cm, from the outlet-side stretching rod tip (11a).

9. Device according to one of claims 7-8,
wherein the stretching rod (11), in the direction of the longitudinal axis (A), has on both sides of the cross-sectional reduction (11b) the same cross section, which is larger than the cross section in the region of the cross-sectional reduction (11b).

10. Device according to one of the preceding claims,
wherein the stretching rod (11) is movable into a stretching position in which the stretching rod seal (16) is configured to provide a fluid-tight, in particular gas-tight, sealing between the two spaces (30, 12).

11. Installation for producing containers filled with liquid filling material (F) from thermally conditioned preforms (90) by introducing a filling material (F) under pressure into the preforms (90), with a device according to one of the preceding claims, preferably comprising a plurality of forming and filling stations, wherein each of the forming and filling stations comprises a device according to one of the preceding claims.

12. Method (100) for producing a container filled with liquid filling material (F) from a thermally conditioned preform (90), comprising the steps:
- providing (110) a device for producing a container filled with liquid filling material (F) from a thermally conditioned preform (90), in particular a device according to one of claims 1-10,
- moving (120) a filling valve (18) for introducing the filling material (F) into the preform (90) under pressure along a longitudinal axis (A) from a neutral position, in which the filling valve (18) is spaced apart from a preform (90), into a filling position, in which the filling valve (18) sealingly abuts with its outlet (19) against a preform (90),
- moving (150) a valve body (13), which controls an inflow lumen (20) of the filling valve (18), axially along the longitudinal axis (A) and within the filling valve (18) from a release position, in which a fluid connection exists between the inflow lumen (20) and the preform (90), into a sealing position, i.e. a position closing the connection between the inflow lumen (20) and the preform (90),
**characterized by**
- moving (160) a stretching rod (11) for stretching the conditioned preform (90), which extends within the valve body (13) along the longitudinal axis (A), with an outlet-side stretching rod tip (11a), into a position cancelling the sealing effect of a stretching rod seal (16), which is arranged between the valve body (13) and the stretching rod (11) and which separates an outlet-side space (30) from an outlet-remote space (12), and cancelling the separation of the two spaces (30, 12).

13. Method according to the preceding claim, comprising
- forming and filling (140) the container, wherein the filling valve (18) is arranged in the filling position and the valve body (13) is arranged in the release position, by means of at least temporarily simultaneously carried out
∘ introducing a fluid through the inflow lumen (20) into the preform (90), and
∘ moving the stretching rod (11) along the longitudinal axis (A) along a stretching path, whereby the preform (90) is stretched along the longitudinal axis (A).

14. Method according to one of claims 12-13, wherein the stretching rod (11) is moved by means of a venting stroke into the position cancelling the sealing effect of the stretching rod seal (16) and cancelling the separation of the two spaces (30, 12), by moving the stretching rod (11) in the outlet-remote direction, such that the outlet-side stretching rod tip (11a), with respect to the longitudinal axis (A),
- is moved to the level of a section of the stretching rod seal (16) adjacent to the outlet-remote space (12), in particular parallel to the section adjacent to the outlet-remote space (12),
or
- is moved spaced apart from a section of the stretching rod seal (16) adjacent to the outlet-remote space (12), in particular into the outlet-remote space (12).

15. Use of a device according to one of claims 1-10 and/or an installation according to claim 11 for producing containers filled with liquid filling material (F) from thermally conditioned preforms (90) by introducing a filling material (F) under pressure into the preforms (90), in particular for producing bottles filled with liquid filling material (F), for example drinking water, from a thermoplastic material, in particular comprising or consisting of PET.

## Revendications

1. Dispositif (1) de production d'un récipient rempli de matériau de remplissage (F) liquide à partir d'une préforme (90) conditionnée thermiquement par introduction d'un matériau de remplissage (F) sous pression dans la préforme (90), comprenant
- une vanne de remplissage (18) pour l'introduction du matériau de remplissage (F) sous pression dans la préforme (90), laquelle vanne est mobile le long d'un axe longitudinal (A) entre une position de remplissage, dans laquelle la vanne de remplissage (18) s'applique avec sa sortie (19) de manière étanche contre une préforme (90), et une position neutre, dans laquelle la vanne de remplissage (18) se trouve à distance d'une préforme (90),
- un corps de vanne (13) déplaçable axialement le long de l'axe longitudinal (A) et à l'intérieur de la vanne de remplissage (18), lequel corps maîtrise une lumière d'afflux (20) de la vanne de remplissage (18) et peut être amené par rapport à la vanne de remplissage (18) d'une position d'étanchéité, c'est-à-dire la position fermant la liaison entre la lumière d'afflux (20) et la préforme (90), à une position de libération, dans laquelle il existe une liaison fluidique entre la lumière d'afflux (20) et la préforme (90),
- une tige d'élongation (11) s'étendant à l'intérieur du corps de vanne (13) le long de l'axe longitudinal (A), laquelle tige est déplaçable axialement le long de l'axe longitudinal (A) par rapport au corps de vanne (13) pour l'étirage de la préforme (90), avec une pointe de tige d'élongation côté sortie (11a), et
- un joint d'étanchéité de tige d'élongation (16), qui est agencé entre le corps de vanne (13) et la tige d'élongation (11) et qui sépare un espace côté sortie (30) d'un espace opposé à la sortie (12),
**caractérisé en ce que**
la tige d'élongation (11) pendant le positionnement de la vanne de remplissage (18) dans la position de remplissage et du corps de vanne (13) dans la position d'étanchéité est mobile dans une position supprimant l'effet d'étanchéité du joint d'étanchéité de tige d'élongation (16) et supprimant la séparation des deux espaces (30, 12).

2. Dispositif selon la revendication précédente,
dans lequel la tige d'élongation (11) est déplaçable, en particulier axialement le long de l'axe longitudinal (A), par rapport au joint d'étanchéité de tige d'élongation (16) et/ou dans lequel le joint d'étanchéité de tige d'élongation (16) est agencé au niveau du corps de vanne (13) et est relié au corps de vanne (13), de préférence par force et/ou par complémentarité de forme.

3. Dispositif selon l'une quelconque des revendications précédentes,
dans lequel dans la position de la tige d'élongation (11) supprimant l'effet d'étanchéité du joint d'étanchéité de tige d'élongation (16) et supprimant la séparation des deux espaces (30, 12), la pointe de tige d'élongation côté sortie (11a) est agencée par rapport à l'axe longitudinal (A)
- à la hauteur d'une section du joint d'étanchéité de tige d'élongation (16) adjacente à l'espace opposé à la sortie (12), en particulier parallèlement à la section du joint d'étanchéité de tige d'élongation (16) adjacente à l'espace opposé à la sortie (12),
ou
- à distance d'une section du joint d'étanchéité de tige d'élongation (16) adjacente à l'espace opposé à la sortie (12), en particulier dans l'espace opposé à la sortie (12).

4. Dispositif selon l'une quelconque des revendications précédentes,
dans lequel l'espace opposé à la sortie (12) est relié et/ou peut être relié par la technique des gaz à l'air ambiant entourant le dispositif, pour la ventilation et/ou la purge de l'espace opposé à la sortie (12) au moyen de l'air ambiant,
et/ou
dans lequel l'espace opposé à la sortie (12) est relié et/ou peut être relié par la technique des gaz à un gaz, en particulier sous forme d'air, qui est agencé dans un espace délimité, pour la ventilation et/ou la purge de l'espace opposé à la sortie (12) au moyen du gaz.

5. Dispositif selon l'une quelconque des revendications précédentes,
dans lequel le joint d'étanchéité de tige d'élongation (16) présente au niveau de sa circonférence intérieure un évidement (16a), qui forme une section entre la tige d'élongation (11) et le joint d'étanchéité de tige d'élongation (16), au niveau de laquelle la tige d'élongation (11) et la circonférence intérieure du joint d'étanchéité de tige d'élongation (16) ne sont pas en contact.

6. Dispositif selon la revendication précédente,
dans lequel l'évidement (16a) est relié à l'espace opposé à la sortie (12) dans chaque position de la tige d'élongation (11), et/ou
dans lequel l'évidement (16a) est relié à l'espace côté sortie (30) dans la position de la tige d'élongation (11) supprimant l'effet d'étanchéité du joint d'étanchéité de tige d'élongation (16) et supprimant la séparation des deux espaces, et/ou
dans lequel l'évidement (16a) est réalisé sous la forme d'une rainure, qui s'étend parallèlement à l'axe longitudinal (A) au niveau de la circonférence intérieure du joint d'étanchéité de tige d'élongation (16) de l'espace opposé à la sortie (12) dans la direction de l'espace côté sortie (30), dans lequel l'évidement (16a) ne s'étend de préférence pas jusqu'à l'espace côté sortie (30), et/ou
dans lequel le joint d'étanchéité de tige d'élongation (16) présente plusieurs, en particulier trois, évidements (16a), qui sont agencés de préférence de manière équidistante l'un par rapport à l'autre et respectivement au niveau de la circonférence intérieure du joint d'étanchéité de tige d'élongation (16).

7. Dispositif selon l'une quelconque des revendications précédentes,
dans lequel la tige d'élongation (11) présente un rétrécissement de section transversale (11b), qui est réalisé pour mettre à disposition une liaison entre l'espace côté sortie (30) et l'espace opposé à la sortie (12) dans la position supprimant l'effet d'étanchéité du joint d'étanchéité de tige d'élongation (16).

8. Dispositif selon la revendication précédente,
dans lequel le rétrécissement de section transversale (11b) est agencé dans la zone de la pointe de tige d'élongation côté sortie (11a) et est réalisé de préférence sous la forme d'une rainure périphérique,
dans lequel le rétrécissement de section transversale (11b) est espacé dans la direction de l'axe longitudinal (A) de préférence de maximum 10 cm, de manière particulièrement préférée de maximum 5 cm, en particulier de maximum 3 cm de la pointe de tige d'élongation côté sortie (11a).

9. Dispositif selon l'une quelconque des revendications 7-8,
dans lequel la tige d'élongation (11) présente dans la direction de l'axe longitudinal (A) des deux côtés du rétrécissement de section transversale (11b) la même section transversale, qui est supérieure à la section transversale dans la zone du rétrécissement de section transversale (11b).

10. Dispositif selon l'une quelconque des revendications précédentes,
dans lequel la tige d'élongation (11) est déplaçable dans une position d'étirage, dans laquelle le joint d'étanchéité de tige d'élongation (16) est réalisé pour établir une étanchéité étanche aux fluides, en particulier étanche aux gaz, entre les deux espaces (30, 12).

11. Installation de production de récipients remplis de matériau de remplissage (F) liquide à partir de préformes (90) conditionnées thermiquement par introduction d'un matériau de remplissage (F) sous pression dans les préformes (90) avec un dispositif selon l'une quelconque des revendications précédentes, comprenant de préférence plusieurs stations de moulage et de remplissage, dans laquelle chacune des stations de moulage et de remplissage présente un dispositif selon l'une quelconque des revendications précédentes.

12. Procédé (100) de production d'un récipient rempli de matériau de remplissage (F) liquide à partir d'une préforme (90) conditionnée thermiquement, comprenant les étapes de :
- mise à disposition (110) d'un dispositif de production d'un récipient rempli de matériau de remplissage (F) liquide à partir d'une préforme (90) conditionnée thermiquement, en particulier d'un dispositif selon l'une quelconque des revendications 1-10,
- déplacement (120) d'une vanne de remplissage (18) pour l'introduction du matériau de remplissage (F) dans la préforme (90) sous pression le long d'un axe longitudinal (A) d'une position neutre, dans laquelle la vanne de remplissage (18) se trouve à distance d'une préforme (90), à une position de remplissage, dans laquelle la vanne de remplissage (18) s'applique avec sa sortie (19) de manière étanche contre une préforme (90),
- déplacement (150) d'un corps de vanne (13), qui maîtrise une lumière d'afflux (20) de la vanne de remplissage (18), axialement le long de l'axe longitudinal (A) et à l'intérieur de la vanne de remplissage (18) d'une position de libération, dans laquelle il existe une liaison fluidique entre la lumière d'afflux (20) et la préforme (90), à une position d'étanchéité, c'est-à-dire la position fermant la liaison entre la lumière d'afflux (20) et la préforme (90),
**caractérisé par**
- le déplacement (160) d'une tige d'élongation (11) pour l'étirage de la préforme (90) conditionnée, qui s'étend à l'intérieur du corps de vanne (13) le long de l'axe longitudinal (A), avec une pointe de tige d'élongation côté sortie (11a) dans une position supprimant l'effet d'étanchéité d'un joint d'étanchéité de tige d'élongation (16), qui est agencé entre le corps de vanne (13) et la tige d'élongation (11) et qui sépare un espace côté sortie (30) d'un espace opposé à la sortie (12), et supprimant la séparation des deux espaces (30, 12).

13. Procédé selon la revendication précédente, comprenant
- le moulage et le remplissage (140) du récipient, dans lequel la vanne de remplissage (18) est agencée dans la position de remplissage et le corps de vanne (13) est agencé dans la position de libération, au moyen de la réalisation simultanée au moins temporaire
∘ de l'introduction d'un fluide à travers la lumière d'afflux (20) dans la préforme (90), et
∘ du déplacement de la tige d'élongation (11) le long de l'axe longitudinal (A) le long d'un trajet d'étirage, moyennant quoi la préforme (90) est étirée le long de l'axe longitudinal (A).

14. Procédé selon l'une quelconque des revendications 12-13, dans lequel la tige d'élongation (11) est déplacée au moyen d'une course de purge dans la position supprimant l'effet d'étanchéité du joint d'étanchéité de tige d'élongation (16) et supprimant la séparation des deux espaces (30, 12), par déplacement de la tige d'élongation (11) dans la direction opposée à la sortie, de sorte que la pointe de tige d'élongation côté sortie (11a) est déplacée par rapport à l'axe longitudinal (A)
- à la hauteur d'une section du joint d'étanchéité de tige d'élongation (16) adjacente à l'espace opposé à la sortie (12), en particulier parallèlement à la section du joint d'étanchéité de tige d'élongation (16) adjacente à l'espace opposé à la sortie (12),
ou
- à distance d'une section du joint d'étanchéité de tige d'élongation (16) adjacente à l'espace opposé à la sortie (12), en particulier dans l'espace opposé à la sortie (12).

15. Utilisation d'un dispositif selon l'une quelconque des revendications 1-10 et/ou d'une installation selon la revendication 11 de production de récipients remplis de matériau de remplissage (F) liquide à partir de préformes (90) conditionnées thermiquement par introduction d'un matériau de remplissage (F) sous pression dans les préformes (90), en particulier de production de bouteilles remplies de matériau de remplissage liquide (F), par exemple d'eau potable, en un matériau thermoplastique, en particulier comprenant ou composé de PET.
